# EUROPEAN PATENT APPLICATION

(11) **EP 4 325 884 A1**
(43) Date of publication of application: **21.02.2024**
(21) Application number: 21941397.8
(22) Date of filing: 14.05.2021
(51) Int. Cl.: H04R 1/10

(54) **HEAD-MOUNTED WIRELESS EARPHONES AND COMMUNICATION METHOD THEREFOR**

(71) Applicant: Huawei Technologies Co., Ltd., Shenzhen, Guangdong 518129 (CN)
(72) Inventor: YANG, Xiaoliang, Shenzhen, Guangdong 518129 (CN); CAO, Cong, Shenzhen, Guangdong 518129 (CN); ZHANG, Shengjie, Shenzhen, Guangdong 518129 (CN); TIAN, Jun, Shenzhen, Guangdong 518129 (CN)
(74) Representative: Körber, Martin Hans
(86) International application number: PCT/CN2021/093920
(87) International publication number: WO 2022/236828

(57) **Abstract**

Embodiments of this application disclose a head-mounted wireless headset and a communication method thereof, and relate to the communication field, to alleviate problems such as a high packet loss rate and poor user experience of the head-mounted wireless headset in a conventional technology. A specific solution is as follows: The head-mounted wireless headset includes: a first headphone, including: a first short-range wireless communication chip and a first radio frequency antenna, where the first short-range wireless communication chip is coupled to the first radio frequency antenna; a second headphone, including: a second short-range wireless communication chip and a second radio frequency antenna, where the second short-range wireless communication chip is coupled to the second radio frequency antenna; and a data bus, separately connected to the first short-range wireless communication chip and the second short-range wireless communication chip, and configured to provide a physical link required for communication between the first short-range wireless communication chip and the second short-range wireless communication chip.

## Description

### TECHNICAL FIELD

Embodiments of this application relate to the communication field, and in particular, to a head-mounted wireless headset and a communication method thereof.

### BACKGROUND

With development of communication technologies, headsets have become indispensable products in people's lives. Currently, a head-mounted wireless headset is a first choice for a music lover to enjoy music because the head-mounted wireless headset is suitable for high-definition music playback.

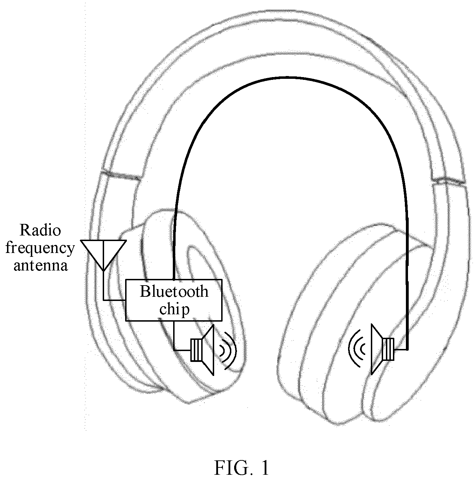

FIG. 1 shows a head-mounted Bluetooth headset. The head-mounted Bluetooth headset includes a Bluetooth chip and a radio frequency antenna coupled to the Bluetooth chip. The Bluetooth chip and the radio frequency antenna are located in one headphone of the head-mounted wireless headset.

In the head-mounted wireless headset, the radio frequency antenna is located in one headphone, and there is no radio frequency antenna in the other headphone. Therefore, a coverage area of the antenna is small, and a direction limitation is large, resulting in poor user experience. For example, if the Bluetooth chip is located on a left ear side of a user, and a mobile phone is located in a right pocket of the user, a Bluetooth signal needs to pass through the human head and the human body, and signal attenuation is huge. Consequently, a packet loss rate of the head-mounted wireless headset is high, and user experience is poor.

### SUMMARY

Embodiments of this application provide a head-mounted wireless headset and a communication method thereof, to reduce a packet loss rate of the head-mounted wireless headset and improve user experience.

To achieve the foregoing objectives, the following technical solutions are used in embodiments of this application.

According to a first aspect of embodiments of this application, a head-mounted wireless headset is provided. The head-mounted wireless headset includes: a first headphone, including: a first short-range wireless communication chip and a first radio frequency antenna, where the first short-range wireless communication chip is coupled to the first radio frequency antenna; a second headphone, including: a second short-range wireless communication chip and a second radio frequency antenna, where the second short-range wireless communication chip is coupled to the second radio frequency antenna; and a data bus, separately connected to the first short-range wireless communication chip and the second short-range wireless communication chip, and configured to provide a physical link required for communication between the first short-range wireless communication chip and the second short-range wireless communication chip. Based on this solution, a short-range wireless communication chip and a radio frequency antenna are disposed in each of two headphones of the head-mounted wireless headset, so that each short-range wireless communication chip can receive data through a radio frequency antenna coupled to the short-range wireless communication chip, to ensure a large coverage area of the head-mounted wireless headset. In addition, the data bus is disposed between the short-distance wireless communication chips in the two headphones, so that the two short-distance wireless communication chips can exchange data through the data bus. Therefore, a part of air interface resources can be released, and a packet loss rate of the head-mounted wireless headset can be reduced, to improve user experience.

Optionally, the data bus may be disposed in a mechanical structure that connects the first headphone and the second headphone.

Optionally, the short-range wireless communication chip in embodiments of this application may include but is not limited to a Bluetooth chip, a Greentooth chip, a ZigBee chip, a near field communication (near field communication, NFC) chip, or another future derived chip used for short-range wireless communication. A specific type of the short-range wireless communication chip is not limited in embodiments of this application.

With reference to the first aspect, in a possible implementation, the first short-range wireless communication chip is configured to: receive a data packet from a terminal device through the first radio frequency antenna; and when the data packet is not successfully received, send first information to the second short-range wireless communication chip through the data bus, to request the second short-range wireless communication chip to forward the data packet, where the first information indicates that the first short-range wireless communication chip does not successfully receive the data packet. Based on this solution, when one short-range wireless communication chip does not successfully receive the data packet, the short-range wireless communication chip that does not successfully receive the data packet may request, through the data bus, another short-range wireless communication chip to forward the data packet, so that even if one short-range wireless communication chip does not successfully receive the data packet, provided that another short-range wireless communication chip successfully receives the data packet, the short-range wireless communication chip that successfully receives the data packet may forward the successfully received data packet to the short-range wireless communication chip that does not successfully receive the data packet, and the terminal device does not need to retransmit the data packet. Therefore, a success rate of receiving the data packet by the head-mounted wireless headset can be improved, and a packet loss rate of the head-mounted wireless headset can be reduced, to improve user experience.

Optionally, the first short-range wireless communication chip may be a primary chip, or may be a secondary chip. When the first short-range wireless communication chip is the primary chip, the second short-range wireless communication chip is the secondary chip. When the first short-range wireless communication chip is the secondary chip, the second short-range wireless communication chip may be the primary chip. The primary chip may be a chip in a left headphone, or may be a chip in a right headphone.

With reference to the first aspect and the possible implementation, in another possible implementation, the second short-range wireless communication chip is configured to: receive the data packet from the terminal device through the second radio frequency antenna; and when the data packet is successfully received, in response to the first information, transmit the successfully received data packet to the first short-range wireless communication chip through the data bus. Based on this solution, the short-range wireless communication chip that successfully receives the data packet forwards, through the data bus, the successfully received data packet to the short-range wireless communication chip that does not successfully receive the data packet. Because a transmission speed of retransmitting the data packet through the data bus is higher than a transmission speed of retransmitting the data packet through an air interface, power consumption of the terminal device and the head-mounted wireless headset can be reduced.

It may be understood that in the solution provided in this application, when only one short-range wireless communication chip successfully receives the data packet, the short-range wireless communication chip that successfully receives the data packet may forward, through the data bus, the data packet to the short-range wireless communication chip that does not successfully receive the data packet, and the terminal device does not need to retransmit the data packet. The terminal device retransmits the data packet only when neither of the two short-range wireless communication chips successfully receives the data packet. Therefore, the success rate of receiving the data packet by the head-mounted wireless headset can be improved.

With reference to the first aspect and the possible implementations, in another possible implementation, the first short-range wireless communication chip is a primary chip, and the second short-range wireless communication chip is a secondary chip. The second short-range wireless communication chip is further configured to send second information to the first short-range wireless communication chip through the data bus. The second information indicates that the second short-range wireless communication chip successfully receives the data packet. The first short-range wireless communication chip is further configured to send third information to the terminal device in response to the second information, where the third information indicates that the data packet is successfully received. Based on this solution, when the primary chip does not successfully receive the data packet, but the secondary chip successfully receives the data packet, the secondary chip may notify, through the data bus, the primary chip that the secondary chip successfully receives the data packet. After learning that the secondary chip successfully receives the data packet, the primary chip may notify, through the air interface, the terminal that the data packet is successfully received. The primary chip and secondary chip perform exchange synchronization through the data bus instead of through the air interface. Therefore, a part of air interface resources can be released, and the packet loss rate of the head-mounted wireless headset can be reduced.

With reference to the first aspect and the possible implementations, in another possible implementation, the first short-range wireless communication chip is a primary chip, and the second short-range wireless communication chip is a secondary chip. The first short-range wireless communication chip is further configured to: when the first short-range wireless communication chip successfully receives the data packet, send third information to the terminal device, where the third information indicates that the data packet is successfully received. Based on this solution, when the primary chip successfully receives the data packet, regardless of whether the secondary chip successfully receives the data packet, the primary chip may directly notify the terminal device that the data packet is successfully received. A difference between this implementation and the foregoing one implementation lies in that, in this implementation, because the primary chip successfully receives the data packet, the primary chip may directly notify the terminal device that the data packet is successfully received. However, in the foregoing one implementation, because the primary chip does not successfully receive the data packet, but the secondary chip successfully receives the data packet, the primary chip notifies the terminal device that the data packet is successfully received after learning that the secondary chip successfully receives the data packet.

With reference to the first aspect and the possible implementations, in another possible implementation, the first short-range wireless communication chip is further configured to send fourth information to the second short-range wireless communication chip, where the fourth information indicates that the first short-range wireless communication chip successfully receives the data packet. Based on this solution, the first short-range wireless communication chip may notify, through the data bus, the second short-range wireless communication chip whether the first short-range wireless communication chip successfully receives the data packet from the terminal device, to implement binaural synchronization.

Optionally, in this embodiment of this application, regardless of whether the first short-range wireless communication chip or the second short-range wireless communication chip successfully receives the data packet of the terminal, both the first short-range wireless communication chip and the second short-range wireless communication chip may notify, through the data bus, the peer party whether the data packet is successfully received from the terminal device, to implement binaural synchronization.

With reference to the first aspect and the possible implementations, in another possible implementation, the first headphone further includes a first speaker, and the first speaker is coupled to the first short-range wireless communication chip. The second headphone further includes a second speaker, and the second speaker is coupled to the second short-range wireless communication chip. The first short-range wireless communication chip is further configured to: decode the data packet, and play the decoded data packet by using the first speaker. The second short-range wireless communication chip is further configured to: decode the data packet, and play the decoded data packet by using the second speaker. Based on this solution, when at least one of the first short-range wireless communication chip and the second short-range wireless communication chip successfully receives the data packet, the first short-range wireless communication chip and the second short-range wireless communication chip may decode the data packet, and respectively play the decoded data packet by using the speaker coupled to each of the first short-range wireless communication chip and the second short-range wireless communication chip. Therefore, the success rate of receiving the data packet by the head-mounted wireless headset can be improved.

Optionally, the data packet decoded by the first short-range wireless communication chip may be the data packet successfully received by the first short-range wireless communication chip from the terminal device, or may be the data packet forwarded by the second short-range wireless communication chip to the first short-range wireless communication chip. The data packet decoded by the second short-range wireless communication chip may be the data packet successfully received by the second short-range wireless communication chip from the terminal device, or may be the data packet forwarded by the first short-range wireless communication chip to the second short-range wireless communication chip.

With reference to the first aspect and the possible implementations, in another possible implementation, the first short-range wireless communication chip is a primary chip, and the second short-range wireless communication chip is a secondary chip. The second short-range wireless communication chip is further configured to: when the second short-range wireless communication chip does not successfully receive a data packet from a terminal device, send fifth information to the first short-range wireless communication chip through the data bus. The fifth information indicates that the second short-range wireless communication chip does not successfully receive the data packet. The first short-range wireless communication chip is configured to: when the first short-range wireless communication chip does not successfully receive the data packet, send sixth information to the terminal device in response to the fifth information, where the sixth information indicates the terminal device to retransmit the data packet. Based on this solution, only when neither the first short-range wireless communication chip nor the second short-range wireless communication chip successfully receives the data packet, the primary chip may indicate the terminal device to retransmit the data packet. In other words, in the solution in this embodiment of this application, provided that at least one short-range wireless communication chip successfully receives the data packet, the terminal device does not need to retransmit the data packet. Therefore, the success rate of receiving the data packet by the head-mounted wireless headset can be improved. In addition, the two short-range wireless communication chips perform exchange through the data bus instead of through the air interface, so that a part of air interface resources can be saved, and the packet loss rate of the head-mounted wireless headset can be further reduced, to improve user experience.

With reference to the first aspect and the possible implementations, in another possible implementation, the data bus includes a serial peripheral interface SPI bus, a queued serial peripheral interface QSPI bus, a dual serial peripheral interface DSPI bus, a universal asynchronous receiver/transmitter UART bus, or an inter-integrated circuit bus I2C. Based on this solution, two short-distance wireless communication chips may be connected through the SPI bus, the QSPI bus, the DSPI bus, the UART bus, or the I2C bus, so that the two short-distance wireless communication chips may exchange data through the data bus instead of through the air interface. Therefore, a part of air interface resources can be released, the packet loss rate of the head-mounted wireless headset can be reduced, to improve user experience.

With reference to the first aspect and the possible implementations, in another possible implementation, the first short-range wireless communication chip includes a first audio processor, a first radio frequency circuit, and a first physical interface, the first audio processor is separately coupled to the first radio frequency circuit and the first physical interface, and the first radio frequency circuit is coupled to the first radio frequency antenna. The second short-range wireless communication chip includes a second audio processor, a second radio frequency circuit, and a second physical interface, the second audio processor is separately coupled to the second radio frequency circuit and the second physical interface, the second radio frequency circuit is coupled to the second radio frequency antenna, and the first physical interface and the second physical interface are coupled through the data bus. The first audio processor is configured to: exchange data with the terminal device through the first radio frequency circuit and the first radio frequency antenna, and exchange data with the second short-range wireless communication chip through the first physical interface and the data bus. The second audio processor is configured to: exchange data with the terminal device through the second radio frequency circuit and the second radio frequency antenna, and exchange data with the first short-range wireless communication chip through the second physical interface and the data bus. Based on this solution, the first short-range wireless communication chip and the second short-range wireless communication chip each include a physical interface, and two physical interfaces are coupled through the data bus, so that the first short-range wireless communication chip and the second short-range wireless communication chip can perform exchange through the data bus instead of through the air interface. Therefore, a part of air interface resources can be released, and the packet loss rate of the head-mounted wireless headset can be reduced.

With reference to the first aspect and the possible implementations, in another possible implementation, the first short-range wireless communication chip and the second short-range wireless communication chip are further configured to determine a primary chip between the first short-range wireless communication chip and the second short-range wireless communication chip based on a signal quality parameter of a signal received by each of the first short-range wireless communication chip and the second short-range wireless communication chip. Based on this solution, both the first short-range wireless communication chip and the second short-range wireless communication chip may determine the primary chip between the two short-range wireless communication chips based on the signal quality parameter of the signal received by each of the two short-range wireless communication chips. It may be understood that the primary chip at a current moment may determine the primary chip between the first short-range wireless communication chip and the second short-range wireless communication chip based on the signal quality parameter of the signal received by each of the first short-range wireless communication chip and the second short-range wireless communication chip. If the current primary chip is different from the determined primary chip, the current primary chip transfers permission of the primary chip to the determined primary chip, and the determined primary chip subsequently executes a function of the primary chip.

Optionally, for example, the first short-range wireless communication chip is set as the primary chip before the head-mounted wireless headset is delivered. In a process of using the head-mounted wireless headset, the first short-range wireless communication chip may determine the primary chip based on the signal quality parameter of the signal received by each of the first short-range wireless communication chip and the second short-range wireless communication chip. If the signal quality parameter of the signal received by the second short-range wireless communication chip is better than the signal quality parameter of the signal received by the first short-range wireless communication chip, the first short-range wireless communication chip may determine the second short-range wireless communication chip as the primary chip, and notify the second short-range wireless communication chip that the second short-range wireless communication chip is the primary chip. The second short-range wireless communication chip continues to execute the function of the primary chip. Optionally, the first short-range wireless communication chip determines the second short-range wireless communication chip as the primary chip. The first short-range wireless communication chip may transfer permission of the primary chip to the second short-range wireless communication chip, that is, the second short-range wireless communication chip is the primary chip. Subsequently, the second primary chip may notify the terminal device whether the data packet is successfully received.

With reference to the first aspect and the possible implementations, in another possible implementation, the signal quality parameter includes: any one or more of reference signal receiving power RSRP, reference signal receiving quality RSRQ, a received signal strength indicator RSSI, a packet loss rate PER, and a signal to interference plus noise ratio SINR. Based on this solution, the current primary chip may determine, based on any one or more parameters of the RSRP, the RSRQ, the RSSI, the PER, or the SINR of the signal received by each of the first short-range wireless communication chip and the second short-range wireless communication chip, the primary chip between the first short-range wireless communication chip and the second short-range wireless communication chip, to ensure that the determined primary chip is a primary chip with a relatively good signal quality parameter.

With reference to the first aspect and the possible implementations, in another possible implementation, there are a plurality of first radio frequency antennas, and there are a plurality of second radio frequency antennas. The first short-range wireless communication chip is further configured to determine a target first radio frequency antenna from the plurality of first radio frequency antennas based on a signal quality parameter of a signal received by each of the plurality of first radio frequency antennas, and there are one or more target first radio frequency antennas. The second short-range wireless communication chip is further configured to determine a target second radio frequency antenna from the plurality of second radio frequency antennas based on a signal quality parameter of a signal received by each of the plurality of second radio frequency antennas, and there are one or more target second radio frequency antennas. Based on this solution, the two short-range wireless communication chips may further determine, from a plurality of radio frequency antennas coupled to the two short-range wireless communication chips, one or more target antennas with relatively good received signal quality parameters, to further improve the success rate of receiving the signal by the Bluetooth headset.

With reference to the first aspect and the possible implementation, in another possible implementation, the first short-range wireless communication chip is specifically configured to receive the data packet from the terminal device through the target first radio frequency antenna. The second short-range wireless communication chip is specifically configured to receive the data packet from the terminal device through the target second radio frequency antenna. Based on this solution, the two short-range wireless communication chips may receive, through the one or more target antennas with relatively good received signal quality parameters, the data packet sent by the terminal device, to further improve the success rate of receiving the signal by the Bluetooth headset.

According to a second aspect of embodiments of this application, a short-range wireless communication chip is provided. The short-range wireless communication chip includes an audio processor, a radio frequency circuit, and a physical interface. The audio processor is separately coupled to the radio frequency circuit and the physical interface. The radio frequency circuit is configured to be coupled to a radio frequency antenna. The physical interface is configured to be coupled to a data bus. The audio processor is configured to exchange data with a terminal device through the radio frequency circuit and the radio frequency antenna. The audio processor is further configured to: send data to the data bus through the physical interface, and receive data transmitted by the data bus.

With reference to the second aspect, in a possible implementation, the audio processor is specifically configured to: receive a data packet from the terminal device through the radio frequency antenna; and when the data packet is not successfully received, send first information to the data bus through the physical interface, to request another short-range wireless communication chip coupled to the data bus to forward the successfully received data packet. The first information indicates that the short-range wireless communication chip does not successfully receive the data packet.

With reference to the second aspect and the possible implementation, in another possible implementation, the audio processor is further specifically configured to: when the another short-range wireless communication chip successfully receives the data packet, receive the data packet from the another short-range wireless communication chip through the physical interface and the data bus.

With reference to the second aspect and the possible implementations, in another possible implementation, the audio processor is further specifically configured to: receive second information from the another short-range wireless communication chip, where the second information indicates that the another short-range wireless communication chip successfully receives the data packet; and send third information to the terminal device in response to the second information, where the third information indicates that the data packet is successfully received.

With reference to the second aspect and the possible implementations, in another possible implementation, the audio processor is further specifically configured to: when the short-range wireless communication chip successfully receives the data packet, send third information to the terminal device, where the third information indicates that the data packet is successfully received.

With reference to the second aspect and the possible implementations, in another possible implementation, the audio processor is further specifically configured to: send fourth information to the another short-range wireless communication chip, where the fourth information indicates that the short-range wireless communication chip successfully receives the data packet.

With reference to the second aspect and the possible implementations, in another possible implementation, the audio processor is further specifically configured to: receive fifth information from another short-range wireless communication chip coupled to the data bus, where the fifth information indicates that the another short-range wireless communication chip does not successfully receive a data packet from the terminal device; and when the short-range wireless communication chip does not successfully receive the data packet, send sixth information to the terminal device in response to the fifth information, where the sixth information indicates the terminal device to retransmit the data packet.

According to a third aspect of embodiments of this application, a communication method for a head-mounted wireless headset is provided. The head-mounted wireless headset includes a first headphone, a second headphone, and a data bus, the first headphone includes a first short-range wireless communication chip and a first radio frequency antenna coupled to the first short-range wireless communication chip, and the second headphone includes a second short-range wireless communication chip and a second radio frequency antenna coupled to the second short-range wireless communication chip. The data bus is separately connected to the first short-range wireless communication chip and the second short-range wireless communication chip, and is configured to provide a physical link required for communication between the first short-range wireless communication chip and the second short-range wireless communication chip. The communication method includes: The first short-range wireless communication chip receives a data packet from a terminal device through the first radio frequency antenna. The second short-range wireless communication chip receives the data packet from the terminal device through the second radio frequency antenna.

With reference to the third aspect, in a possible implementation, the method further includes: When the first short-range wireless communication chip does not successfully receive the data packet, the first short-range wireless communication chip sends first information to the second short-range wireless communication chip through the data bus, to request the second short-range wireless communication chip to forward the successfully received data packet. The first information indicates that the first short-range wireless communication chip does not successfully receive the data packet.

With reference to the third aspect and the possible implementations, in another possible implementation, the method further includes: When the second short-range wireless communication chip successfully receives the data packet, the second short-range wireless communication chip transmits, in response to the first information, the successfully received data packet to the first short-range wireless communication chip through the data bus.

With reference to the third aspect and the possible implementations, in another possible implementation, the first short-range wireless communication chip is a primary chip, and the second short-range wireless communication chip is a secondary chip. The method further includes: The second short-range wireless communication chip sends second information to the first short-range wireless communication chip through the data bus. The second information indicates that the second short-range wireless communication chip successfully receives the data packet. The first short-range wireless communication chip sends third information to the terminal device in response to the second information, where the third information indicates that the data packet is successfully received.

With reference to the third aspect and the possible implementations, in another possible implementation, the first short-range wireless communication chip is a primary chip, and the second short-range wireless communication chip is a secondary chip. The method further includes: When the first short-range wireless communication chip successfully receives the data packet, the first short-range wireless communication chip sends third information to the terminal device, where the third information indicates that the data packet is successfully received.

With reference to the third aspect and the possible implementations, in another possible implementation, the method further includes: The first short-range wireless communication chip sends fourth information to the second short-range wireless communication chip, where the fourth information indicates that the first short-range wireless communication chip successfully receives the data packet.

With reference to the third aspect and the possible implementations, in another possible implementation, the first headphone further includes a first speaker, and the first speaker is coupled to the first short-range wireless communication chip. The second headphone further includes a second speaker, and the second speaker is coupled to the second short-range wireless communication chip. The method further includes: The first short-range wireless communication chip decodes the data packet, and plays the decoded data packet by using the first speaker. The second short-range wireless communication chip decodes the data packet, and plays the decoded data packet by using the second speaker.

With reference to the third aspect and the possible implementations, in another possible implementation, the first short-range wireless communication chip is a primary chip, and the second short-range wireless communication chip is a secondary chip. The method further includes: When the second short-range wireless communication chip does not successfully receive the data packet, the second short-range wireless communication chip sends fifth information to the first short-range wireless communication chip through the data bus. The fifth information indicates that the second short-range wireless communication chip does not successfully receive the data packet. When the first short-range wireless communication chip does not successfully receive the data packet, the first short-range wireless communication chip sends sixth information to the terminal device in response to the fifth information, where the sixth information indicates the terminal device to retransmit the data packet.

With reference to the third aspect and the possible implementations, in another possible implementation, the first short-range wireless communication chip includes a first audio processor, a first radio frequency circuit, and a first physical interface, the first audio processor is separately coupled to the first radio frequency circuit and the first physical interface, and the first radio frequency circuit is coupled to the first radio frequency antenna. The second short-range wireless communication chip includes a second audio processor, a second radio frequency circuit, and a second physical interface, the second audio processor is separately coupled to the second radio frequency circuit and the second physical interface, the second radio frequency circuit is coupled to the second radio frequency antenna, and the first physical interface and the second physical interface are coupled through the data bus.

With reference to the third aspect and the possible implementations, in another possible implementation, the data bus includes a serial peripheral interface SPI bus, a queued serial peripheral interface QSPI bus, a dual serial peripheral interface DSPI bus, a universal asynchronous receiver/transmitter UART bus, or an inter-integrated circuit bus I2C.

For effect descriptions of the second aspect and the third aspect, refer to the effect description of the first aspect. Details are not described herein again.

According to a fourth aspect of embodiments of this application, a computer-readable storage medium is provided. The computer-readable storage medium stores computer program code, and when the computer program code is run on a processor, the processor is enabled to perform the method according to the third aspect.

According to a fifth aspect of embodiments of this application, a computer program product is provided. The program product stores computer software instructions executed by the foregoing processor, and the computer software instructions include a program used to perform the solution according to the third aspect.

### BRIEF DESCRIPTION OF DRAWINGS

FIG. 1 is a schematic diagram of a structure of a head-mounted wireless headset according to an embodiment of this application;
FIG. 2 is a schematic diagram of another head-mounted wireless headset according to an embodiment of this application;
FIG. 3 is a schematic diagram of another head-mounted wireless headset according to an embodiment of this application;
FIG. 4 is a schematic diagram of another head-mounted wireless headset according to an embodiment of this application;
FIG. 5 is a schematic diagram of a hardware structure of a head-mounted wireless headset according to an embodiment of this application;
FIG. 6 is a schematic diagram of a structure of a short-range wireless communication chip according to an embodiment of this application;
FIG. 7 is a schematic flowchart of a communication method for a head-mounted wireless headset according to an embodiment of this application;
FIG. 8 is a schematic flowchart of another communication method for a head-mounted wireless headset according to an embodiment of this application;
FIG. 9 is a schematic flowchart of another communication method for a head-mounted wireless headset according to an embodiment of this application;
FIG. 10 is a schematic flowchart of a communication method for a head-mounted wireless headset according to an embodiment of this application; and
FIG. 11 is a schematic diagram of a communication effect of a head-mounted wireless headset according to an embodiment of this application.

### DESCRIPTION OF EMBODIMENTS

The following describes technical solutions in embodiments of this application with reference to accompanying drawings in embodiments of this application. In this application, "at least one" means one or more, and "a plurality of" means two or more. Term "and/or" is an association relationship for describing associated objects and indicates that three relationships may exist. For example, A and/or B may indicate the following three cases: Only A exists, both A and B exist, and only B exists. A and B may be singular or plural. A character "/" usually indicates an "or" relationship between the associated objects. "At least one item (piece) of the following" or a similar expression thereof means any combination of these items, including a singular item (piece) or any combination of plural items (pieces). For example, at least one of a, b, or c may indicate: a, b, c, a and b, a and c, b and c, or a, b and c, where a, b, and c may be singular or plural. In addition, for ease of clearly describing the technical solutions in embodiments of this application, in embodiments of this application, words such as "first" and "second" are used to distinguish same items or similar items whose functions and effects are basically the same. A person skilled in the art may understand that the words such as "first" and "second" do not limit a quantity or an execution sequence. For example, in embodiments of this application, the "first" in a first headphone and the "second" in a second headphone are merely used to distinguish between different headphones. Descriptions such as first and second in embodiments of this application are merely used for indicating and distinguishing between described objects, do not show a sequence, do not indicate a special limitation on a quantity of devices in embodiments of this application, and cannot constitute any limitation on embodiments of this application.

It should be noted that, in this application, the word such as "as an example" or "for example" indicates giving an example, an illustration, or a description. Any embodiment or design scheme described as "an example" or "for example" in this application should not be construed as being more preferable or advantageous than other embodiments or design schemes. To be precise, the word such as "example" or "for example" is intended to present a related concept in a specific manner.

Currently, a head-mounted wireless headset is a first choice for a music lover to enjoy music because the head-mounted wireless headset is suitable for high-definition music playback. However, an existing head-mounted wireless headset is generally a Bluetooth headset with a single Bluetooth chip.

For example, FIG. 1 is a head-mounted wireless headset with a single Bluetooth chip. As shown in FIG. 1, the head-mounted wireless headset includes a Bluetooth chip and a radio frequency antenna coupled to the Bluetooth chip. The Bluetooth chip and the radio frequency antenna are located on one side of the head-mounted wireless headset, and speakers in two headphones of the head-mounted wireless headset are separately coupled and connected to the Bluetooth chip by using cables.

However, in the head-mounted wireless headset shown in FIG. 1, the radio frequency antenna is located in one headphone, and there is no radio frequency antenna in the other headphone. Therefore, a coverage area of the antenna is small, and a direction limitation is large, resulting in poor user experience. For example, if the Bluetooth chip is located on a left ear side of a user, and a mobile phone is located in a right pocket of the user, a Bluetooth signal needs to pass through a human head and a human body, and signal attenuation is huge. Consequently, a packet loss rate of the head-mounted wireless headset is high, and user experience is poor.

To improve a coverage area of a head-mounted wireless headset with a single Bluetooth chip, an embodiment of this application provides a head-mounted wireless headset. For the head-mounted wireless headset, a radio frequency antenna may be disposed in each of two headphones, and antennas of the two headphones are connected by using an antenna coaxial cable.

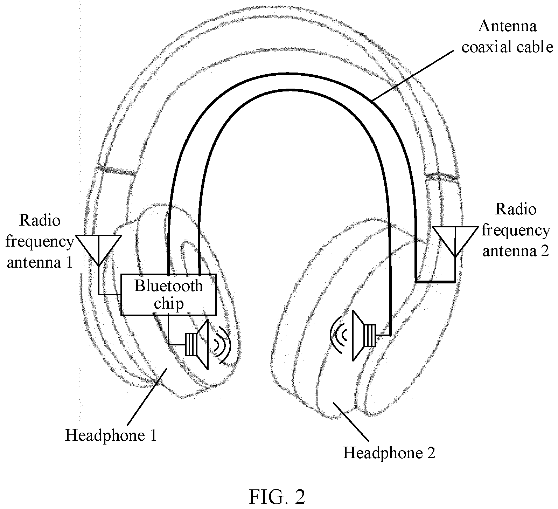

For example, FIG. 2 shows a head-mounted wireless headset. The head-mounted wireless headset includes a headphone 1 and a headphone 2, the headphone 1 includes a Bluetooth chip and a radio frequency antenna 1 coupled to the Bluetooth chip, and the headphone 2 includes a radio frequency antenna 2. The radio frequency antenna 2 is coupled to the Bluetooth chip by using an antenna coaxial cable, and the antenna coaxial cable passes through a connection part of the head-mounted headset. Speakers in the headphone 1 and the headphone 2 are separately coupled to the Bluetooth chip by using cables.

However, in the head-mounted wireless headset shown in FIG. 2, because the antenna coaxial cable passes through the connection part of the head-mounted headset, and the connection part is bent to different degrees in a usage process by a user, the antenna coaxial cable is easily broken. In this way, that the antenna normally receives data cannot be ensured, and user experience may be poor. In addition, the antenna coaxial cable is too long, resulting in too large insertion losses of the antenna, and an antenna gain is poor. Consequently, a signal received by the antenna is poor.

To improve a coverage area of a head-mounted wireless headset, an embodiment of this application further provides a head-mounted wireless headset. For the head-mounted wireless headset, a Bluetooth chip and a radio frequency antenna may be disposed in each of two headphones.

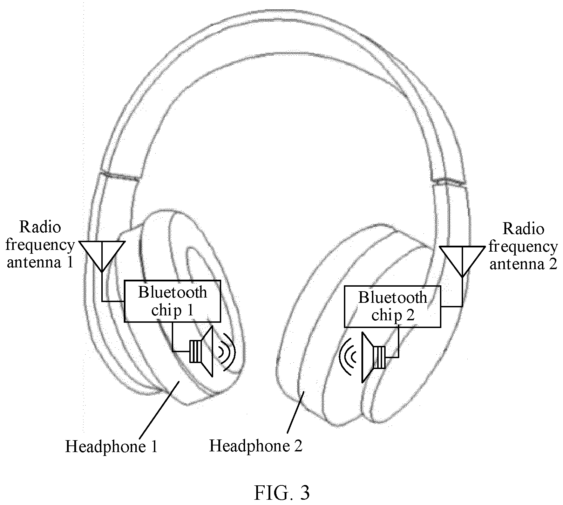

For example, FIG. 3 shows a head-mounted wireless headset. The head-mounted wireless headset includes a headphone 1 and a headphone 2, the headphone 1 includes a Bluetooth chip 1 and a radio frequency antenna 1 coupled to the Bluetooth chip 1, and the headphone 2 includes a Bluetooth chip 2 and a radio frequency antenna 2 coupled to the Bluetooth chip 2. Optionally, the headphone 1 and the headphone 2 may further include speakers. A speaker in the headphone 1 is coupled to the Bluetooth chip 1, and a speaker in the headphone 2 is coupled to the Bluetooth chip 2.

Although the Bluetooth headset shown in FIG. 3 has the large coverage area, because signals received by the two headphones are unbalanced in most scenarios, packet losses of the two headphones may affect each other. For example, when a mobile phone is located in a right pocket of a user, because the right headphone is relatively close to the mobile phone, and a signal quality parameter is relatively good, the right headphone can receive an audio data packet sent by the mobile phone. However, after receiving the audio data packet, the right headphone cannot directly play the audio data packet, but needs to play the audio data packet together with the left headphone after the left headphone receives the audio data packet. However, because the left headphone is relatively far away from the mobile phone, and a signal quality parameter is relatively poor, the audio data packet sent by the mobile phone may not be received. A packet loss of the left headphone may affect the right headphone. Consequently, neither the left headphone nor the right headphone can play audio data. In addition, each of the Bluetooth chips of the left headphone and the right headphone not only receives, through an air interface, the audio data packet sent by the mobile phone, but also determines, through the air interface, whether a peer party receives the audio data packet. Consequently, a rate of the air interface may be insufficient, and transmission of the audio data packet is affected.

To reduce a packet loss rate of the head-mounted wireless headset and improve user experience, an embodiment of this application further provides a head-mounted wireless headset. The head-mounted wireless headset includes a first headphone, a second headphone, and a data bus. The first headphone includes: a first short-range wireless communication chip and a first radio frequency antenna, where the first short-range wireless communication chip is coupled to the first radio frequency antenna. The second headphone includes: a second short-range wireless communication chip and a second radio frequency antenna, where the second short-range wireless communication chip is coupled to the second radio frequency antenna. The data bus is separately connected to the first short-range wireless communication chip and the second short-range wireless communication chip, and is configured to provide a physical link required for communication between the first short-range wireless communication chip and the second short-range wireless communication chip.

The first headphone may be a left headphone or a right headphone. When the first headphone is the left headphone, the second headphone is the right headphone. When the first headphone is the right headphone, the second headphone is the left headphone.

Optionally, the first headphone may include one or more first radio frequency antennas, and the second headphone may include one or more second radio frequency antennas.

Optionally, the first short-range wireless communication chip and the second short-range wireless communication chip each may include but is not limited to a Bluetooth chip, a Greentooth chip, a ZigBee chip, a near field communication (near field communication, NFC) chip, or another future derived chip used for short-range wireless communication. A specific type of the short-range wireless communication chip is not limited in embodiments of this application. In the following embodiment, an example in which the short-range wireless communication chip is the Bluetooth chip is used for description.

Optionally, the data bus may be disposed in a mechanical structure that connects the first headphone and the second headphone. For example, the head-mounted wireless headset may further include an arc-shaped support frame, the first headphone and the second headphone are connected by using the arc-shaped support frame, and the data bus between the first short-range wireless communication chip and the second short-range wireless communication chip may be disposed in the arc-shaped support frame. A specific location of the data bus between the first short-range wireless communication chip and the second short-range wireless communication chip is not limited in this embodiment of this application. This is merely an example for description herein.

Optionally, the data bus includes a serial peripheral interface (serial peripheral interface, SPI) bus, a queued serial peripheral interface (queued serial peripheral interface, QSPI) bus, and a dual serial peripheral interface (dual serial peripheral interface, DSPI) bus, a universal asynchronous receiver/transmitter (universal asynchronous receiver/transmitter, UART) bus, or an inter-integrated circuit bus (inter-integrated circuit bus, I2C). A specific type of the data bus is not limited in this embodiment of this application.

Optionally, the first headphone may further include a first speaker, and the first speaker is coupled to the first short-range wireless communication chip. The first short-range wireless communication chip is further configured to: decode a data packet, and play the decoded data packet by using the first speaker.

Optionally, the second headphone may further include a second speaker, and the second speaker is coupled to the second short-range wireless communication chip. The second short-range wireless communication chip is configured to: decode the data packet, and play the decoded data packet by using the second speaker.

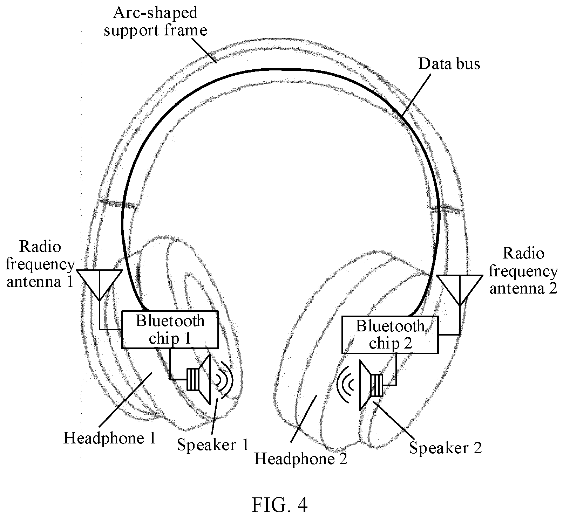

For example, FIG. 4 shows a head-mounted wireless headset. The head-mounted wireless headset includes a headphone 1, a headphone 2, and a data bus. The headphone 1 includes a Bluetooth chip 1, and a radio frequency antenna 1 and a speaker 1 that are separately coupled to the Bluetooth chip 1. The headphone 2 includes a Bluetooth chip 2, and a radio frequency antenna 2 and a speaker 2 that are separately coupled to the Bluetooth chip 2. The headphone 1 and the headphone 2 are connected by using an arc-shaped support frame, and the Bluetooth chip 1 and the Bluetooth chip 2 are connected through the data bus, where the data bus may be disposed in the arc-shaped support frame.

The first short-range wireless communication chip is configured to receive a data packet from a terminal device through the first radio frequency antenna.

The second short-range wireless communication chip is configured to receive the data packet from the terminal device through the second radio frequency antenna.

Optionally, the data packet received by each of the first short-range wireless communication chip and the second short-range wireless communication chip may be an audio data packet. The first short-range wireless communication chip and the second short-range wireless communication chip each may receive the audio data packet from the terminal device through an air interface.

For example, as shown in FIG. 4, the Bluetooth chip 1 may receive a data packet 1 from the terminal device through the radio frequency antenna 1, and the Bluetooth chip 2 may receive the data packet 1 from the terminal device through the radio frequency antenna 2.

In actual application, the first short-range wireless communication chip and the second short-range wireless communication chip each may not successfully receive the data packet sent by the terminal device, or may successfully receive the data packet sent by the terminal device, or one of the short-range wireless communication chips may successfully receive the data packet sent by the terminal device, and the other short-range wireless communication chip does not successfully receive the data packet sent by the terminal device. With reference to different scenarios, the following describes in detail functions of the first short-range wireless communication chip and the second short-range wireless communication chip by using an example in which the first short-range wireless communication chip is a primary chip and the second short-range wireless communication chip is a secondary chip.

Optionally, the primary chip may be a chip in the left headphone, or may be a chip in the right headphone. This is not limited in this embodiment of this application. When the primary chip is the short-range wireless communication chip in the left headphone, the short-range wireless communication chip in the right headphone is the secondary chip. When the primary chip is the short-range wireless communication chip in the right headphone, the short-range wireless communication chip in the left headphone is the primary chip.

In a first scenario, the first short-range wireless communication chip does not successfully receive the data packet, and the second short-range wireless communication chip successfully receives the data packet.

The first short-range wireless communication chip is further configured to send first information to the second short-range wireless communication chip through the data bus, to request the second short-range wireless communication chip to forward the data packet successfully received by the second short-range wireless communication chip. The first information indicates that the first short-range wireless communication chip does not successfully receive the data packet.

The second short-range wireless communication chip is further configured to: in response to the first information, forward, through the data bus, the successfully received data packet to the first short-range wireless communication chip.

For example, as shown in FIG. 4, the Bluetooth chip 1 is the primary chip, and the Bluetooth chip 2 is the secondary chip. When the Bluetooth chip 1 does not successfully receive the data packet 1, but the Bluetooth chip 2 successfully receives the data packet 1, the Bluetooth chip 1 sends the first information to the Bluetooth chip 2, to notify the Bluetooth chip 2 that the Bluetooth chip 1 does not successfully receive the data packet 1, so as to request the Bluetooth chip 2 to forward the data packet 1 successfully received by the Bluetooth chip 2. In response to the first information, the Bluetooth chip 2 forwards, through the data bus, the data packet 1 successfully received by the Bluetooth chip 2 to the Bluetooth chip 1.

The second short-range wireless communication chip is further configured to send second information to the first short-range wireless communication chip through the data bus. The second information indicates that the second short-range wireless communication chip successfully receives the data packet.

The first short-range wireless communication chip is further configured to send third information to the terminal device in response to the second information. The third information indicates that the data packet is successfully received.

Optionally, the third information may be an acknowledgment (Acknowledgement, ACK).

For example, as shown in FIG. 4, the Bluetooth chip 1 is the primary chip, and the Bluetooth chip 2 is the secondary chip. When the Bluetooth chip 1 does not successfully receive the data packet 1, but the Bluetooth chip 2 successfully receives the data packet 1, the Bluetooth chip 2 sends the second information to the Bluetooth chip 1, to notify the Bluetooth chip 1 that the Bluetooth chip 2 successfully receives the data packet 1. In response to the second information, the Bluetooth chip 1 notifies the terminal device that the data packet is successfully received.

In this embodiment of this application, when the primary chip does not successfully receive the data packet, but the secondary chip successfully receives the data packet, the secondary chip may notify, through the data bus, the primary chip that the secondary chip successfully receives the data packet. After learning that the secondary chip successfully receives the data packet, the primary chip may notify, through the air interface, the terminal that the data packet is successfully received.

In a second scenario, the first short-range wireless communication chip successfully receives the data packet, and the second short-range wireless communication chip does not successfully receive the data packet.

The second short-range wireless communication chip is further configured to send fifth information to the first short-range wireless communication chip through the data bus, to request the first short-range wireless communication chip to forward the data packet. The fifth information indicates that the second short-range wireless communication chip does not successfully receive the data packet.

The first short-range wireless communication chip is further configured to: in response to the fifth information, transmit the data packet to the second short-range wireless communication chip through the data bus.

For example, as shown in FIG. 4, the Bluetooth chip 1 is the primary chip, and the Bluetooth chip 2 is the secondary chip. When the Bluetooth chip 1 successfully receives a data packet 2, and the Bluetooth chip 2 does not successfully receive the data packet 2, the Bluetooth chip 2 sends the fifth information to the Bluetooth chip 1, to notify the Bluetooth chip 1 that the Bluetooth chip 2 does not successfully receive the data packet 2, so as to request the Bluetooth chip 1 to forward the data packet 2 successfully received by the Bluetooth chip 1. In response to the fifth information, the Bluetooth chip 1 forwards, through the data bus, the data packet 2 successfully received by the Bluetooth chip 1 to the Bluetooth chip 2.

The first short-range wireless communication chip is further configured to send the third information to the terminal device, where the third information indicates that the data packet is successfully received.

In both the first scenario and the second scenario, the primary chip notifies the terminal device that the data packet is successfully received. A difference between the second scenario and the first scenario lies in that, in the second scenario, because the primary chip successfully receives the data packet, the primary chip may directly notify the terminal device that the data packet is successfully received. However, in the first scenario, because the primary chip does not successfully receive the data packet, but the secondary chip successfully receives the data packet, the primary chip notifies the terminal device that the data packet is successfully received after learning that the secondary chip successfully receives the data packet.

Optionally, in the second scenario, the first short-range wireless communication chip may further send fourth information to the second short-range wireless communication chip. The fourth information indicates that the first short-range wireless communication chip successfully receives the data packet.

In the first scenario and the second scenario, when only one short-range wireless communication chip successfully receives the data packet, the short-range wireless communication chip that successfully receives the data packet may forward, through the data bus, the successfully received data packet to the other short-range wireless communication chip that does not successfully receive the data packet. The short-range wireless communication chip that successfully receives the data packet may be the primary chip, or may be the secondary chip. This is not limited in this application.

It may be understood that in this embodiment, the data bus is disposed between the two short-range wireless communication chips, and the two short-range wireless communication chips may perform exchange through the data bus instead of through an air interface. Therefore, a part of air interface resources can be released, and a packet loss rate of the head-mounted wireless headset can be reduced. In addition, in this embodiment, when one short-range wireless communication chip does not successfully receive the data packet, the short-range wireless communication chip that successfully receives the data packet may forward, through the data bus, the successfully received data packet to the short-range wireless communication chip that does not successfully receive the data packet. Because a transmission speed of the data bus is high, a success rate of receiving the data packet by the two short-range wireless communication chips can be improved, and power consumption of the terminal device and the head-mounted wireless headset can be reduced.

In a third scenario, the first short-range wireless communication chip successfully receives the data packet, and the second short-range wireless communication chip successfully receives the data packet.

The first short-range wireless communication chip is further configured to send the third information to the terminal device, where the third information indicates that the data packet is successfully received.

In this scenario, because the primary chip successfully receives the data packet, the primary chip may directly notify the terminal device that the data packet is successfully received.

Optionally, the second short-range wireless communication chip may further send the second information to the first short-range wireless communication chip, to notify the first short-range wireless communication chip that the second short-range wireless communication chip successfully receives the data packet.

In a fourth scenario, the first short-range wireless communication chip does not successfully receive the data packet, and the second short-range wireless communication chip does not successfully receive the data packet.

The second short-range wireless communication chip is further configured to send the fifth information to the first short-range wireless communication chip through the data bus. The fifth information indicates that the second short-range wireless communication chip does not successfully receive the data packet.

The first short-range wireless communication chip is further configured to send sixth information to the terminal device in response to the fifth information. The sixth information indicates the terminal device to retransmit the data packet.

Optionally, the sixth information may be a negative acknowledgment (Negative Acknowledgement, NACK).

In this scenario, because neither the primary chip nor the secondary chip successfully receives the data packet, after learning, through the data bus, that the secondary chip does not successfully receive the data packet either, the primary chip may notify, through the air interface, the terminal device to retransmit the data packet.

Optionally, in actual application, in any foregoing scenario, both the first short-range wireless communication chip and the second short-range wireless communication chip may notify, through the data bus, a peer party whether the data packet is successfully received from the terminal device, to implement binaural synchronization. For example, as shown in FIG. 4, the Bluetooth chip 1 may notify, through the data bus, the Bluetooth chip 2 that the Bluetooth chip 1 successfully receives or does not successfully receive the data packet. The Bluetooth chip 2 notifies, through the data bus, the Bluetooth chip 1 that the Bluetooth chip 2 successfully receives or does not successfully receive the data packet. In this way, the two Bluetooth chips can learn whether the peer party successfully receives the data packet from the terminal device, to implement binaural synchronization.

Optionally, the first short-range wireless communication chip includes a first audio processor, a first radio frequency circuit, and a first physical interface. The first audio processor is separately coupled to the first radio frequency circuit and the first physical interface, and the first radio frequency circuit is coupled to the first radio frequency antenna. The second short-range wireless communication chip includes a second audio processor, a second radio frequency circuit, and a second physical interface. The second audio processor is separately coupled to the second radio frequency circuit and the second physical interface, the second radio frequency circuit is coupled to the second radio frequency antenna, and the first physical interface and the second physical interface are coupled through the data bus.

The first audio processor is configured to: exchange data with the terminal device through the first radio frequency circuit and the first radio frequency antenna, and exchange data with the second short-range wireless communication chip through the first physical interface and the data bus.

The second audio processor is configured to: exchange data with the terminal device through the second radio frequency circuit and the second radio frequency antenna, and exchange data with the first short-range wireless communication chip through the second physical interface and the data bus.

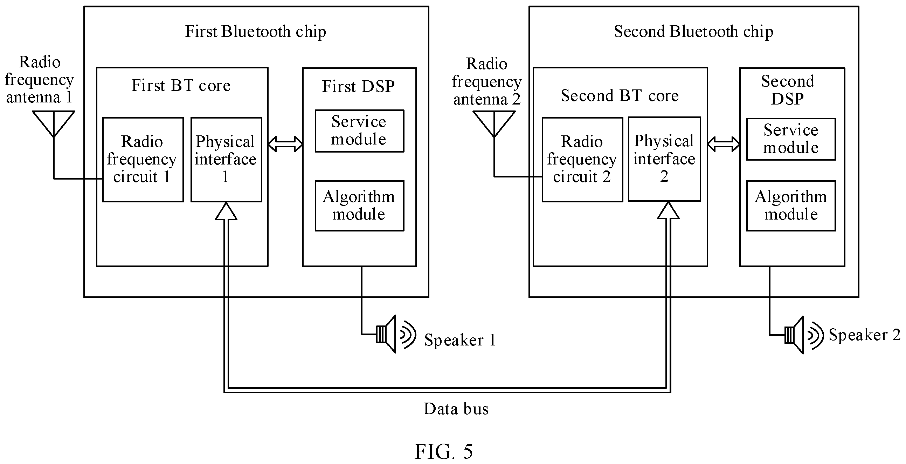

For example, as shown in FIG. 5, the first short-range wireless communication chip and the second short-range wireless communication chip each are a Bluetooth chip, and the first audio processor and the second audio processor each are a digital signal processor (digital signal processor, DSP). A first Bluetooth chip includes a first Bluetooth (Bluetooth, BT) core and a first DSP, and data between the first BT core and the first DSP is exchanged in an inter-process communication (inter-process communication, IPC) manner. The first BT core includes a radio frequency circuit 1 and a physical interface 1. The first DSP is separately coupled to the radio frequency circuit 1 and the physical interface 1, and the radio frequency circuit 1 is coupled to the radio frequency antenna 1. The second Bluetooth chip may include a second BT core and a second DSP. The second BT core includes a radio frequency circuit 2 and a physical interface 2. The second DSP is separately coupled to the radio frequency circuit 2 and the physical interface 2, and the radio frequency circuit 2 is coupled to the radio frequency antenna 2. The physical interface 1 and the physical interface 2 are connected through the data bus, and the physical interface 1 and the physical interface 2 may be an interface such as an SPI interface, a UART interface, or an I2C interface. A specific type of the audio processor is not limited in this embodiment of this application. The audio processor may be any processor that can decode the audio data packet. FIG. 5 is merely an example in which the audio processor is the DSP. A service module and an algorithm module included in the DSP are configured to decode the audio data packet.

It should be noted that, circuit structures of the first Bluetooth chip and the second Bluetooth chip may be completely the same as each other, or may not be completely the same as each other. Specific structures of the first Bluetooth chip and the second Bluetooth chip are not limited in this embodiment of this application. FIG. 5 is merely an example for description.

It may be understood that, in this embodiment, the data bus is disposed between the first short-range wireless communication chip and the second short-range wireless communication chip, and the two short-range wireless communication chips may perform exchange through the data bus. When one short-range wireless communication chip does not successfully receive the data packet, the other short-range wireless communication chip that successfully receives the data packet may forward, through the data bus, the successfully received data packet to the short-range wireless communication chip that does not successfully receive the data packet. In this embodiment, the two short-range wireless communication chips perform exchange through the data bus instead of through the air interface. Therefore, a part of air interface resources can be released, and a packet loss rate of the head-mounted wireless headset can be reduced. In addition, in this embodiment, the two short-distance wireless communication chips forward the data packet through the data bus, and the transmission speed is high, so that the success rate of receiving the data packet by the two short-distance wireless communication chips can be improved, and the power consumption of the terminal device and the head-mounted wireless headset can be reduced.

For example, the mobile phone is relatively close to the left headphone and is relatively far away from the right headphone, a success rate of receiving the data packet at a single time by the left headphone is 80%, and a success rate of receiving the data packet at a single time by the right headphone is 60%. For the head-mounted wireless headset with the single Bluetooth chip shown in FIG. 1, if the single Bluetooth chip is located on the left headphone side of the head-mounted wireless headset, a success rate of receiving the data packet by the head-mounted wireless headset with the single Bluetooth chip is 80%. For the head-mounted wireless headset shown in FIG. 3, audio data can be normally played only when both the two headphones successfully receive the data packet, that is, a success rate of receiving the data packet by the head-mounted wireless headset with two Bluetooth chips is: 80% x 60% = 48%. For the head-mounted wireless headset shown in FIG. 4, the terminal device needs to retransmit the data packet only when neither of the two headphones successfully receives the data packet. Therefore, a success rate of receiving the data packet by the head-mounted wireless headset is: 1 - (1 - 80%) x (1 - 60%) = 88%. Therefore, the head-mounted wireless headset shown in FIG. 4 can improve the success rate of receiving the data packet.

For another example, the mobile phone is relatively close to the right headphone and is relatively far away from the left headphone, a success rate of receiving the data packet at a single time by the left headphone is 60%, and a success rate of receiving the data packet at a single time by the right headphone is 80%. For the head-mounted wireless headset with the single Bluetooth chip shown in FIG. 1, if the single Bluetooth chip is located on the left headphone side of the head-mounted wireless headset, a success rate of receiving the data packet by the head-mounted wireless headset with the single Bluetooth chip is 60%. For the head-mounted wireless headset shown in FIG. 3, audio data can be normally played only when both the two headphones successfully receive the data packet, that is, a success rate of receiving the data packet by the head-mounted wireless headset with two Bluetooth chips is: 80% x 60% = 48%. For the head-mounted wireless headset shown in FIG. 4, the terminal device needs to retransmit the data packet only when neither of the two headphones successfully receives the data packet. Therefore, a success rate of receiving the data packet by the head-mounted wireless headset is: 1 - (1 - 80%) x (1 - 60%) = 88%. Therefore, the head-mounted wireless headset shown in FIG. 4 can improve the success rate of receiving the data packet.

Optionally, in this embodiment of this application, the first short-range wireless communication chip and the second short-range wireless communication chip may not only transmit the first information, the second information, the fourth information, and the fifth information through the data bus, but also transmit other information other than the first information, the second information, the fourth information, and the fifth information. For example, the first short-range wireless communication chip and the second short-range wireless communication chip may transmit information such as volume, statistical data, a signal quality parameter, a log, and a timestamp of the headphone through the data bus.

In the head-mounted wireless headset provided in this embodiment, two short-range wireless communication chips are disposed, and the two short-range wireless communication chips may perform exchange through the data bus. Therefore, a part of air interface resources can be released, and a quantity of retransmission times of the data packet can be reduced, to reduce the power consumption of the terminal device and the head-mounted wireless headset. When one short-range wireless communication chip does not successfully receive the data packet, the other short-range wireless communication chip that successfully receives the data packet may forward, through the data bus, the successfully received data packet to the short-range wireless communication chip that does not successfully receive the data packet, so that the success rate of receiving the data packet by the head-mounted wireless headset can be improved, and the packet loss rate of the head-mounted wireless headset can be reduced, to improve user experience.

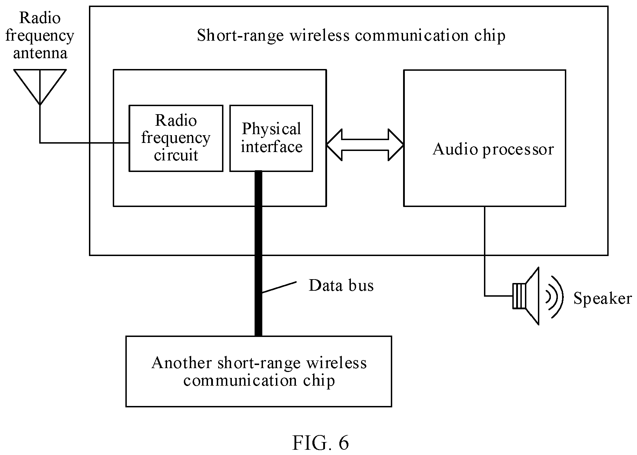

An embodiment of this application further provides a short-range wireless communication chip. As shown in FIG. 6, the short-range wireless communication chip includes an audio processor, a radio frequency circuit, and a physical interface, where the audio processor is separately coupled to the radio frequency circuit and the physical interface, the radio frequency circuit is configured to be coupled to a radio frequency antenna, and the physical interface is configured to be coupled to a data bus.

The audio processor is configured to exchange data with a terminal device through the radio frequency circuit and the radio frequency antenna.

The audio processor is further configured to: send data to the data bus through the physical interface, and receive data transmitted by the data bus.

Optionally, as shown in FIG. 6, the short-range wireless communication chip may be coupled to the another short-range wireless communication chip through the data bus, and the two short-range wireless communication chips perform exchange through the data bus.

The audio processor is specifically configured to receive a data packet from the terminal device through the radio frequency antenna.

The audio processor is further specifically configured to: when the data packet is not successfully received, send first information to the data bus through the physical interface, to request the another short-range wireless communication chip coupled to the data bus to forward the data packet. The first information indicates that the short-range wireless communication chip does not successfully receive the data packet.

The audio processor is further specifically configured to: when the another short-range wireless communication chip coupled to the data bus successfully receives the data packet, receive, through the physical interface and the data bus, the data packet from the another short-range wireless communication chip.

The audio processor is further specifically configured to: receive second information from the another short-range wireless communication chip coupled to the data bus, where the second information indicates that the another short-range wireless communication chip successfully receives the data packet, and send third information to the terminal device in response to the second information, where the third information indicates that the data packet is successfully received.

The audio processor is further specifically configured to: when the short-range wireless communication chip successfully receives the data packet, send the third information to the terminal device. Optionally, the audio processor may further send fourth information to the another short-range wireless communication chip coupled to the data bus. The fourth information indicates that the short-range wireless communication chip successfully receives the data packet.

The audio processor is further specifically configured to receive fifth information from the another short-range wireless communication chip coupled to the data bus. The fifth information indicates that the another short-range wireless communication chip does not successfully receive the data packet from the terminal device. When the short-range wireless communication chip does not successfully receive the data packet, the audio processor sends sixth information to the terminal device in response to the fifth information. The sixth information indicates the terminal device to retransmit the data packet.

It may be understood that, the short-range wireless communication chip provided in this embodiment may perform exchange with the another short-range wireless communication chip through the data bus, that is, the two short-range wireless communication chips perform exchange through the data bus instead of through an air interface. Therefore, a part of air interface resources can be released, and a packet loss rate can be reduced. In addition, in this embodiment, when one short-range wireless communication chip does not successfully receive the data packet, the short-range wireless communication chip may request the another short-range wireless communication chip that successfully receives the data packet to forward the data packet, and the short-range wireless communication chip that successfully receives the data packet may forward the data packet through the data bus. A transmission speed is high, so that the success rate of receiving the data packet by the short-range wireless communication chip can be improved, and power consumption of the terminal device and the chip can be reduced.

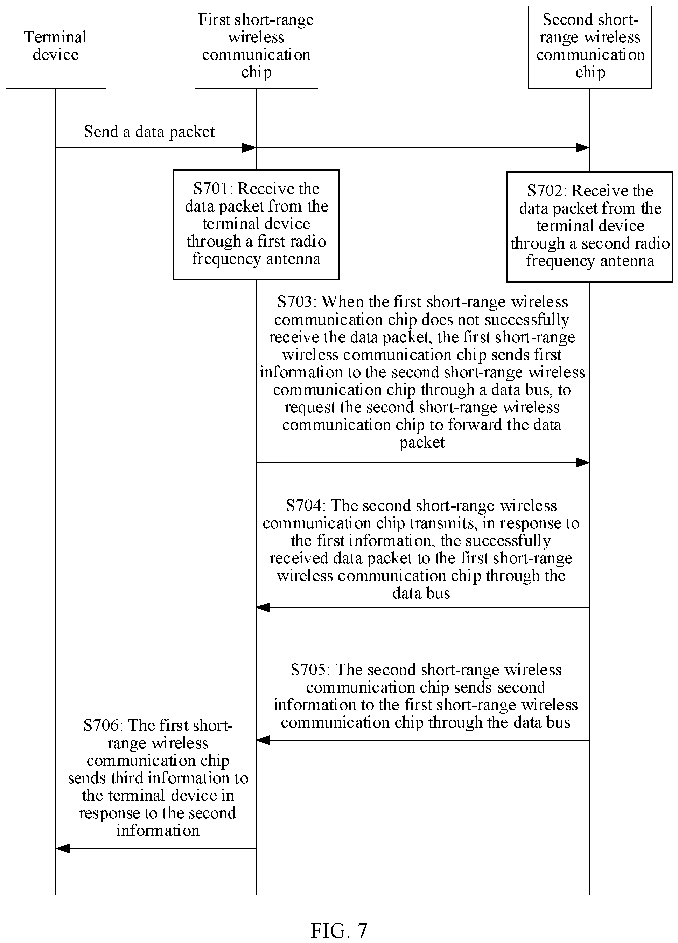

With reference to FIG. 4 to FIG. 6, an embodiment of this application further provides a communication method for a head-mounted wireless headset. The head-mounted wireless headset may be the head-mounted wireless headset shown in FIG. 4. It is assumed that the first short-range wireless communication chip is the primary chip, the second short-range wireless communication chip is the secondary chip, the primary chip does not successfully receive the data packet, and the secondary chip successfully receives the data packet. As shown in FIG. 7, the communication method may include the following steps.

S701: The first short-range wireless communication chip receives the data packet from the terminal device through the first radio frequency antenna.

Optionally, there may be one or more first radio frequency antennas. When the head-mounted wireless headset includes one first radio frequency antenna, the first short-range wireless communication chip may receive the data packet from the terminal device through the one first radio frequency antenna. When the head-mounted wireless headset includes a plurality of first radio frequency antennas, the first short-range wireless communication chip may receive the data packet from the terminal device through one first radio frequency antenna, or may simultaneously receive the data packet from the terminal device through the plurality of first radio frequency antennas.

Optionally, the terminal device in this embodiment of this application may be an electronic device such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the terminal device is not specially limited in this embodiment of this application. In the following embodiment, an example in which the terminal device is a mobile phone is used for description.

Optionally, when there are the plurality of first radio frequency antennas, before step S701, the method may further include: The first short-range wireless communication chip determines a target first radio frequency antenna from the plurality of first radio frequency antennas based on a signal quality parameter of a signal received by each of the plurality of first radio frequency antennas. Correspondingly, that the first short-range wireless communication chip receives the data packet from the terminal device through the first radio frequency antenna in step S701 includes: The first short-range wireless communication chip receives the data packet from the terminal device through the target first radio frequency antenna.

Optionally, there may be one or more target first radio frequency antennas. When there is one target first radio frequency antenna, the first short-range wireless communication chip receives the data packet from the terminal device through the one target first radio frequency antenna. When there are a plurality of target first radio frequency antennas, the first short-range wireless communication chip simultaneously receives the data packet from the terminal device through the plurality of target first radio frequency antennas.

Optionally, the signal quality parameter of the signal of received by the first radio frequency antenna includes one or more of a reference signal receiving power (reference signal receiving power, RSRP), reference signal receiving quality (reference signal receiving quality, RSRQ), a received signal strength indicator (received signal strength indicator, RSSI), and a packet loss rate (packet error rate, PER), and a signal to interference plus noise ratio (signal to interference plus noise ratio, SINR).

For example, the first short-range wireless communication chip may determine one or more target first radio frequency antennas from the plurality of first radio frequency antennas based on the strength RSSI and the packet loss rate PER of the signal received by each of the plurality of first radio frequency antennas.

It may be understood that the first short-range wireless communication chip determines the target first radio frequency antenna from the plurality of first radio frequency antennas, and receives the data packet from the terminal device through the target first radio frequency antenna, so that a success rate of receiving a signal by the head-mounted wireless headset can be improved.

S702: The second short-range wireless communication chip receives the data packet from the terminal device through the second radio frequency antenna.

Optionally, there may be one or more second radio frequency antennas. When there are a plurality of second radio frequency antennas, before step S702, the method may further include: The second short-range wireless communication chip determines a target second radio frequency antenna from the plurality of second radio frequency antennas based on a signal quality parameter of a signal received by each of the plurality of second radio frequency antennas. Correspondingly, that the second short-range wireless communication chip receives the data packet from the terminal device through the second radio frequency antenna in step S702 includes: The second short-range wireless communication chip receives the data packet from the terminal device through the target second radio frequency antenna.

Optionally, there may be one or more target second radio frequency antennas. When there is one target second radio frequency antenna, the second short-range wireless communication chip receives the data packet from the terminal device through the one target second radio frequency antenna. When there are a plurality of target second radio frequency antennas, the second short-range wireless communication chip simultaneously receives the data packet from the terminal device through the plurality of target second radio frequency antennas.

Optionally, the signal quality parameter of the signal received by the second radio frequency antenna includes any one or more of reference signal receiving power RSRP, reference signal receiving quality RSRQ, a received signal strength indicator RSSI, a packet loss rate PER, and a signal to interference plus noise ratio SINR.

For example, the second short-range wireless communication chip may determine one or more target second radio frequency antennas from the plurality of second radio frequency antennas based on the strength RSSI and the packet loss rate PER of the signal received by each of the plurality of second radio frequency antennas.

Optionally, that the first short-range wireless communication chip determines the signal quality parameter of the target first radio frequency antenna may be the same as or different from that the second short-range wireless communication chip determines the signal quality parameter of the target second radio frequency antenna. This is not limited in this embodiment of this application.

It may be understood that the second short-range wireless communication chip determines the target second radio frequency antenna from the plurality of second radio frequency antennas, and receives the data packet from the terminal device through the target second radio frequency antenna, so that a success rate of receiving a signal by the head-mounted wireless headset can be improved.

Optionally, in actual application, when the terminal device sends the data packet, the first short-range wireless communication chip may first receive the data packet, and then the second short-range wireless communication chip receives the data packet. Alternatively, the second short-range wireless communication chip may first receive the data packet, and then the first short-range wireless communication chip receives the data packet. Alternatively, the first short-range wireless communication chip and the second short-range wireless communication chip simultaneously receive the data packet. This is not limited in this embodiment of this application.

S703: When the first short-range wireless communication chip does not successfully receive the data packet, the first short-range wireless communication chip sends the first information to the second short-range wireless communication chip through the data bus, to request the second short-range wireless communication chip to forward the data packet.

The first information indicates that the first short-range wireless communication chip does not successfully receive the data packet.

Optionally, the first short-range wireless communication chip may be the chip in the left headphone, or may be the chip in the right headphone. When the first short-range wireless communication chip is the chip in the left headphone, the second short-range wireless communication chip is the chip in the right headphone. When the first short-range wireless communication chip is the chip in the right headphone, the second short-range wireless communication chip is the chip in the left headphone.

S704: The second short-range wireless communication chip transmits, in response to the first information, the successfully received data packet to the first short-range wireless communication chip through the data bus.

It may be understood that, in this embodiment, when one short-range wireless communication chip does not successfully receive the data packet, the short-range wireless communication chip that does not successfully receive the data packet may request another short-range wireless communication chip that successfully receives the data packet to forward the data packet. The short-range wireless communication chip that successfully receives the data packet may forward, through the data bus, the data packet to the short-range wireless communication chip that does not successfully receive the data packet, so that the success rate of receiving the data packet by the head-mounted wireless headset can be improved, and the packet loss rate of the head-mounted wireless headset can be reduced, to improve user experience.

Optionally, after step S701 to step S704, S705 and S706 may be further included.

S705: The second short-range wireless communication chip sends the second information to the first short-range wireless communication chip through the data bus.

The second information indicates that the second short-range wireless communication chip successfully receives the data packet.

S706: The first short-range wireless communication chip sends the third information to the terminal device in response to the second information.

The third information indicates that the data packet is successfully received.

It should be noted that, an execution sequence of step S701 to step S706 shown in FIG. 7 is not limited in this application. FIG. 7 is merely an example for description.

According to the communication method provided in this embodiment of this application, when only one short-range wireless communication chip successfully receives the data packet, the short-range wireless communication chip that successfully receives the data packet may forward, through the data bus, the received data packet to the short-range wireless communication chip that does not successfully receive the data packet, and the terminal device does not need to retransmit the data packet. Therefore, the packet loss rate of the head-mounted wireless headset can be reduced, to improve user experience. In addition, the two short-range wireless communication chips perform exchange through the data bus instead of through the air interface, so that a part of air interface resources can be released, and the packet loss rate of the head-mounted wireless headset can be further reduced, to improve user experience.

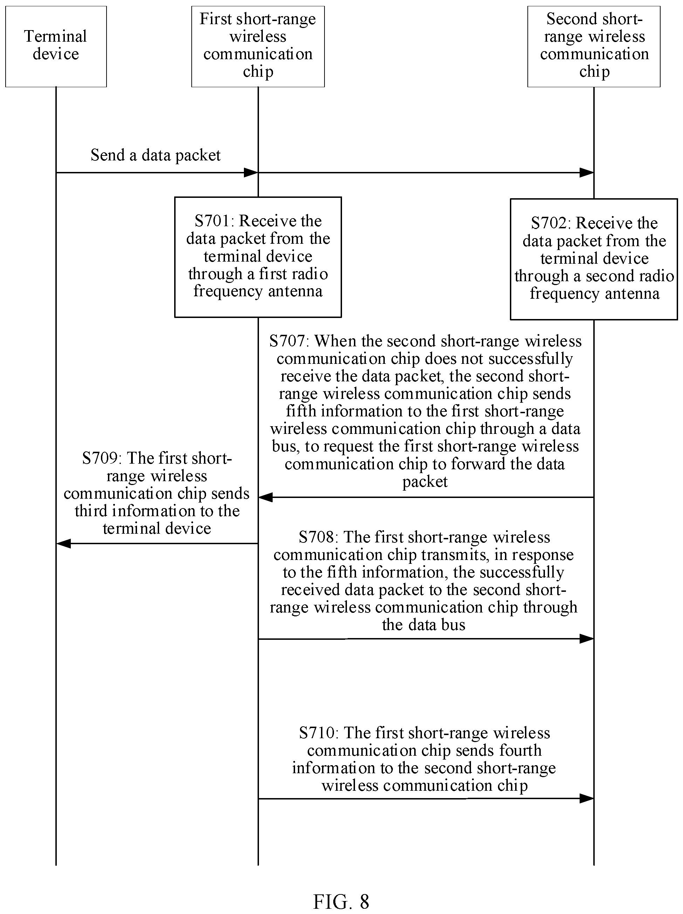

An embodiment of this application further provides a communication method for a head-mounted wireless headset. As shown in FIG. 8, it is assumed that the first short-range wireless communication chip is the primary chip, the second short-range wireless communication chip is the secondary chip, the primary chip successfully receives the data packet, and the secondary chip does not successfully receive the data packet. After step S701 and step S702, the method may further include the following steps.

S707: When the second short-range wireless communication chip does not successfully receive the data packet, the second short-range wireless communication chip sends the fifth information to the first short-range wireless communication chip through the data bus, to request the first short-range wireless communication chip to forward the data packet.

The fifth information indicates that the second short-range wireless communication chip does not successfully receive the data packet.

S708: The first short-range wireless communication chip transmits, in response to the fifth information, the successfully received data packet to the second short-range wireless communication chip through the data bus.

S709: The first short-range wireless communication chip sends the third information to the terminal device.

The third information indicates that the data packet is successfully received.

In this embodiment, if the primary chip successfully receives the data packet, the primary chip may notify the terminal device that the data packet is successfully received regardless of whether the secondary chip successfully receives the data packet. If the secondary chip does not successfully receive the data packet, the secondary chip may request the primary chip to forward the data packet, so that both the primary chip and secondary chip successfully receive the data packet and play the audio data.

Optionally, in embodiments shown in FIG. 7 and FIG. 8 in this application, provided that one short-range wireless communication chip successfully receives the data packet sent by the terminal device, the primary chip may notify the terminal device that the data packet is successfully received. A difference between the embodiment shown in FIG. 7 and the embodiment shown in FIG. 8 lies in that in the embodiment shown in FIG. 8, because the primary chip successfully receives the data packet, the primary chip may directly notify the terminal device that the data packet is successfully received. However, in the embodiment shown in FIG. 7, because the primary chip does not successfully receive the data packet, but the secondary chip successfully receives the data packet, the primary chip notifies the terminal device that the data packet is successfully received after learning that the secondary chip successfully receives the data packet.

Optionally, the method may further include step S710.

S710: The first short-range wireless communication chip sends the fourth information to the second short-range wireless communication chip.

The fourth information indicates that the first short-range wireless communication chip successfully receives the data packet.

Optionally, regardless of whether the first short-range wireless communication chip or the second short-range wireless communication chip successfully receives the data packet of the terminal, both the first short-range wireless communication chip and the second short-range wireless communication chip may notify, through the data bus, the peer party whether the data packet is successfully received from the terminal device, to implement binaural synchronization.

It should be noted that, an execution sequence of step S707 to step S710 shown in FIG. 8 is not limited in this application. FIG. 8 is merely an example for description. For example, step S709 may be performed before step S707, or may be performed after step S707, or may be performed simultaneously with step S707.

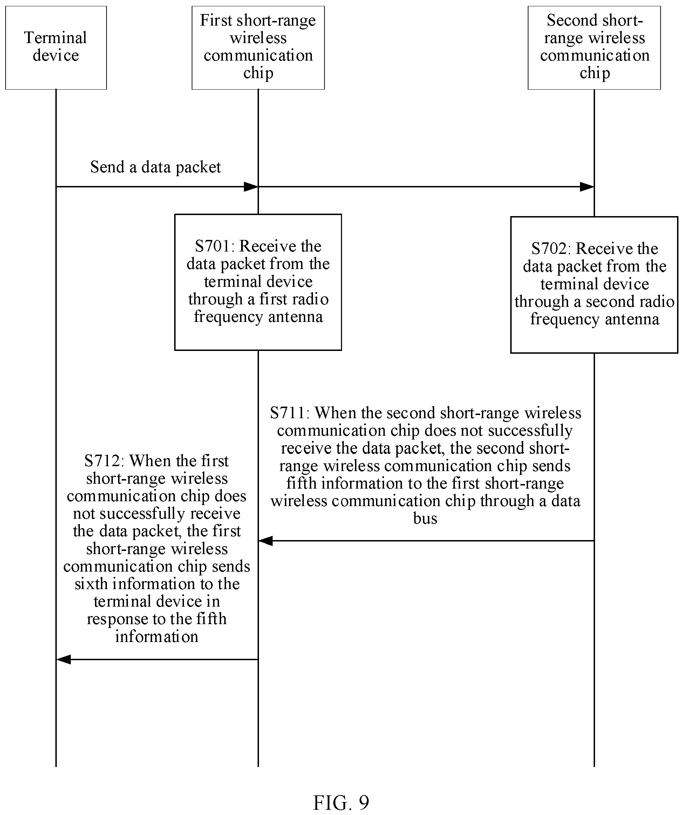

An embodiment of this application further provides a communication method for a head-mounted wireless headset. As shown in FIG. 9, it is assumed that the first short-range wireless communication chip is the primary chip, the second short-range wireless communication chip is the secondary chip, and neither the primary chip nor the secondary chip successfully receives the data packet. After step S701 and step S702, the method may further include the following steps.

S711: When the second short-range wireless communication chip does not successfully receive the data packet, the second short-range wireless communication chip sends the fifth information to the first short-range wireless communication chip through the data bus.

The fifth information indicates that the second short-range wireless communication chip does not successfully receive the data packet.

S712: When the first short-range wireless communication chip does not successfully receive the data packet, the first short-range wireless communication chip sends the sixth information to the terminal device in response to the fifth information.

The sixth information indicates the terminal device to retransmit the data packet.

It may be understood that, in this embodiment, because neither the primary chip nor the secondary chip successfully receives the data packet, after learning, through the data bus, that the secondary chip does not successfully receive the data packet either, the primary chip may notify, through the air interface, the terminal device to retransmit the data packet. In other words, in this embodiment of this application, the terminal device retransmits the data packet only when neither of the two short-range wireless communication chips successfully receives the data packet. Therefore, the success rate of receiving the data packet by the head-mounted wireless headset can be improved.

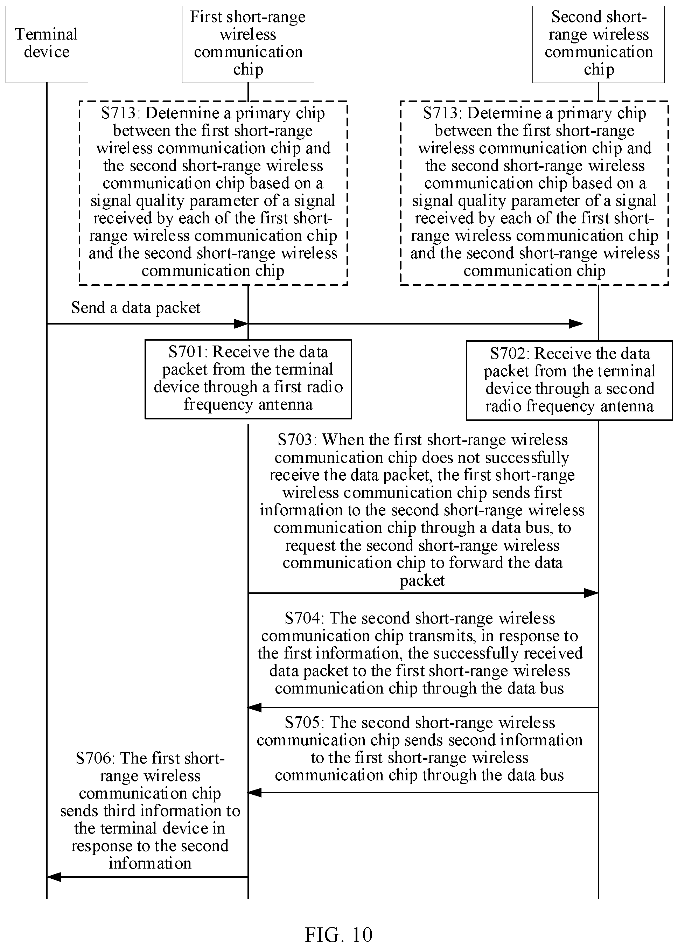

Optionally, the communication method for the head-mounted wireless headset shown in any one of embodiments in FIG. 7 to FIG. 9 may further include step S713. FIG. 10 is merely an example in which the embodiment shown in FIG. 7 further includes step S713.

S713: Determine the primary chip between the first short-range wireless communication chip and the second short-range wireless communication chip based on the signal quality parameter of the signal received by each of the first short-range wireless communication chip and the second short-range wireless communication chip.

Optionally, the signal quality parameter of the received signal includes: any one or more of reference signal receiving power RSRP, reference signal receiving quality RSRQ, a received signal strength indicator RSSI, a packet loss rate PER, and a signal to interference plus noise ratio SINR.

Optionally, step S713 may be performed by the primary chip, and the primary chip may be the first short-range wireless communication chip, or may be the second short-range wireless communication chip.

For example, any short-range wireless communication chip between the first short-range wireless communication chip and the second short-range wireless communication chip may be set as the primary chip before the head-mounted wireless headset is delivered. In a process of using the head-mounted wireless headset, the primary chip may dynamically determine, based on the signal quality parameter of the signal received by each of the first short-range wireless communication chip and the second short-range wireless communication chip, a short-range wireless communication chip with a relatively good signal quality parameter of the received signal as the primary chip. That is, in the process of using the head-mounted wireless headset, as a parameter such as a location of the terminal device changes, the primary chip may switch between the first short-range wireless communication chip and the second short-range wireless communication chip.

For example, the first short-range wireless communication chip in the left headphone is set as the primary chip before the head-mounted wireless headset is delivered. In the process of using the head-mounted wireless headset, if the signal quality parameter of the signal received by the second short-range wireless communication chip in the right headphone is better than the signal quality parameter of the signal received by the first short-range wireless communication chip in the left headphone, the first short-range wireless communication chip may determine the second short-range wireless communication chip as the primary chip, and notify the second short-range wireless communication chip that the second short-range wireless communication chip is the primary chip, and the second short-range wireless communication chip continues to execute a function of the primary chip. Optionally, the first short-range wireless communication chip determines the second short-range wireless communication chip as the primary chip. The first short-range wireless communication chip may transfer permission of the primary chip to the second short-range wireless communication chip, that is, the second short-range wireless communication chip is the primary chip. Subsequently, the second primary chip may notify the terminal device whether the data packet is successfully received.

Optionally, in the process of using the head-mounted wireless headset, step S713 may be performed at an interval of a period of time to determine the primary chip, or step S713 may be performed in real time to determine the primary chip, or step S713 may be performed to determine the primary chip when the signal quality parameter of the current primary chip is relatively poor. This is not limited in this embodiment of this application.

An execution sequence of step S713 and step S701 and step S702 is not limited in this embodiment of this application. FIG. 10 is merely an example in which step S713 is performed before step S701 and step S702. In actual application, step S713 may alternatively be performed before step S701 and step S702, or step S713 may alternatively be performed simultaneously with step S701 and step S702.

According to the communication method for the head-mounted wireless headset provided in this embodiment, two short-range wireless communication chips perform exchange through the data bus, so that a part of air interface resources can be released, and a quantity of retransmission times of the data packet can be reduced, to reduce power consumption of the terminal device and the headset.

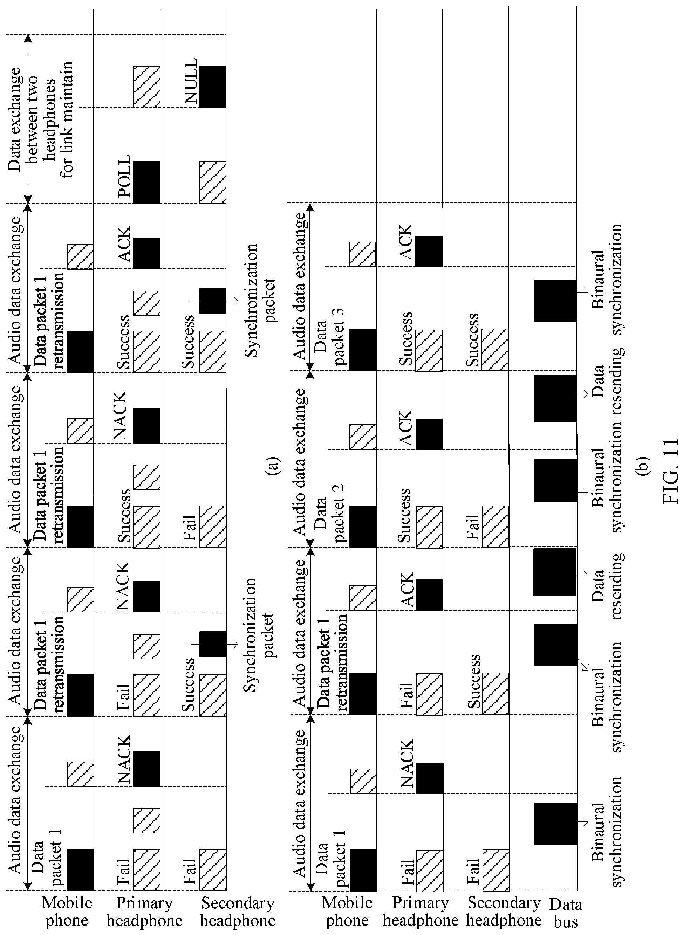

FIG. 11 is a schematic diagram of a communication effect of a head-mounted wireless headset according to an embodiment of this application. (a) in FIG. 11 is a schematic diagram of a communication effect of the head-mounted wireless headset shown in FIG. 3. (b) in FIG. 11 is a schematic diagram of a communication effect of the head-mounted wireless headset shown in FIG. 4. As shown in (a) in FIG. 11, after a mobile phone sends a data packet 1, a primary headphone and a secondary headphone attempt to receive the data packet 1 (a slash-filled rectangular box in FIG. 11 indicates an attempt to receive). If neither the primary headphone (a headphone in which a primary chip is located) nor the secondary headphone (a headphone in which the secondary chip is located) successfully receives the data packet 1, the primary headphone sends a NACK to the mobile phone. The mobile phone retransmits the data packet 1. If the primary headphone does not successfully receive the data packet 1 but the secondary headphone successfully receives the data packet 1, the secondary headphone sends a synchronization packet to the primary headphone to notify the primary headphone that the secondary headphone successfully receives the data packet 1. The packet loss of the primary headphone may affect the secondary headphone. Consequently, neither the primary headphone nor the secondary headphone can play audio data. Therefore, the primary headphone sends the negative acknowledgment NACK to the mobile phone. The mobile phone retransmits the data packet 1 again. If the primary headphone successfully receives the data packet 1 but the secondary headphone does not successfully receive the data packet 1, the packet loss of the secondary headphone may affect the primary headphone. Consequently, neither the primary headphone nor the secondary headphone can play the audio data. Therefore, the primary headphone sends the negative acknowledgment NACK to the mobile phone. The mobile phone retransmits the data packet 1 again. If both the primary headphone and the secondary headphone successfully receive the data packet 1, the secondary headphone sends a synchronization packet to the primary headphone, to notify the primary headphone that the secondary headphone successfully receives the data packet 1. Because the primary headphone also successfully receives the data packet 1, the primary headphone sends an ACK to the mobile phone, to notify the mobile phone that the data packet 1 is successfully received.

It may be understood that, when the head-mounted wireless headset shown in FIG. 3 is used for communication, packet losses of the two headphones may affect each other. Provided that one headphone does not successfully receive the data packet, a packet loss of the headphone affects the other headphone, and as a result, neither of the two headphones can play audio data. Audio data can be played normally only when both the two headphones successfully receive the data packet. Therefore, a success rate of receiving the data packet by the head-mounted wireless headset is low.

As shown in (b) in FIG. 11, after the mobile phone sends the data packet 1, if neither the primary headphone nor the secondary headphone successfully receives the data packet 1, binaural synchronization is performed between the primary headphone and the secondary headphone through the data bus, to determine whether the peer party successfully receives the data packet 1. When the primary headphone determines that neither the primary headphone nor the secondary headphone successfully receives the data packet 1, the primary headphone sends the negative acknowledgment NACK to the mobile phone. The mobile phone retransmits the data packet 1. If the primary headphone does not successfully receive the data packet 1 but the secondary headphone successfully receives the data packet 1, the primary headphone may notify, through the data bus, the secondary headphone that the primary headphone does not successfully receive the data packet 1 (binaural synchronization), to request the secondary headphone to forward the data packet 1. When the secondary headphone learns that the primary headphone does not successfully receive the data packet 1, the secondary headphone sends the successfully received data packet 1 to the primary headphone through the data bus (data resending shown in (b) in FIG. 11). After successfully receiving the data packet 1, the secondary headphone notifies the primary headphone (binaural synchronization). When the primary headphone determines that the secondary headphone successfully receives the data packet 1, the primary headphone may send an ACK to the mobile phone, to notify the mobile phone that the data packet 1 is successfully received. The mobile phone sends a data packet 2. If the primary headphone successfully receives the data packet 2, but the secondary headphone does not successfully receive the data packet 2, the secondary headphone notifies, through the data bus, the primary headphone that the secondary headphone does not successfully receive the data packet 2 (binaural synchronization), to request the primary headphone to forward the data packet 2. When the primary headphone learns that the secondary headphone does not successfully receive the data packet 2, the primary headphone sends the successfully received data packet 2 to the secondary headphone through the data bus between the two headphones. The primary headphone sends the ACK message to the mobile phone, to indicate that the data packet 2 is successfully received. The mobile phone sends a data packet 3. If both the primary headphone and the secondary headphone successfully receive the data packet 3, binaural synchronization may be performed between the primary headphone and the secondary headphone through the data bus. The primary headphone sends the ACK to the mobile phone to notify the mobile phone that the data packet 3 is successfully received.

As shown in (b) in FIG. 11, when at least one headphone of the primary headphone and the secondary headphone successfully receives the data packet sent by the mobile phone, the primary headphone may send the ACK to the mobile phone, to notify the mobile phone that the data packet is successfully received. If only one headphone of the primary headphone and the secondary headphone successfully receives the data packet, the headphone that successfully receives the data packet may forward, through the data bus, the successfully received data packet to the headphone that does not successfully receive the data packet.

It may be understood that, when the head-mounted wireless headset shown in FIG. 4 is used for communication, packet losses of the two headphones may not affect each other. Provided that one headphone successfully receives the data packet, the short-range wireless communication chip that successfully receives the data packet may resend, through the data bus, the data packet to the short-range wireless communication chip that does not successfully receive the data packet, and the terminal device does not need to retransmit the data packet. The terminal device retransmits the data packet only when neither of the two short-range wireless communication chips successfully receives the data packet. Therefore, the head-mounted wireless headset shown in FIG. 4 has a relatively high success rate of receiving the data packet.

As shown in (a) in FIG. 11, after the mobile phone and the two headphones exchange audio data, if there is no data exchange between the two headphones, the two headphones further need to use a Polling polling mechanism, so that the primary headphone periodically sends a Poll packet, and the secondary headphone returns a NULL packet, to notify the primary headphone that the secondary headphone currently does not have data to be transmitted, so as to maintain a normal link between the two headphones. When data needs to be exchanged between the two headphones (for example, the two headphones exchange information such as volume, a timestamp, or a log of a headphone), each of the Poll packet and the NULL packet may be replaced with the data packet, to complete data exchange between the two headphones. As shown in (b) in FIG. 11, after the mobile phone and the two headphones exchange audio data, because the two headphones perform exchange through the data bus, information such as volume, a timestamp, and a log of the headphone may be transmitted through the data bus, and an air interface link between the two headphones does not need to be maintained. Therefore, air interface resources can be saved, and a success rate of receiving the data packet by the Bluetooth headset can be improved. In addition, a transmission speed of retransmitting the data packet between the two headphones through the data bus is high, which can reduce power consumption of the terminal device and the head-mounted wireless headset.

It may be understood that, compared with the head-mounted wireless headset shown in FIG. 3, the head-mounted wireless headset shown in FIG. 4 has the data bus disposed between the short-distance wireless communication chips of the two headphones, and a data packet may be resent between the two headphones through the data bus. Therefore, the mobile phone needs to retransmit the data packet only when neither of the two headphones successfully receives the data packet, so that the success rate of receiving the data packet by the head-mounted wireless headset can be improved. In addition, the two headphones are synchronized through the data bus instead of performing exchange through the air interface. Therefore, a part of air interface resources can be released, a quantity of retransmission times of the data packet can be reduced, so that power consumption of the terminal device and the headset can be reduced.

It should be noted that, the primary headphone in this embodiment of this application may be the left headphone of the head-mounted wireless headset, or may be the right headphone of the head-mounted wireless headset. This is not limited in this embodiment of this application.

An embodiment of this application further provides a computer-readable storage medium. The computer-readable storage medium stores computer program code. When the computer program code is run on a short-range wireless communication chip, the short-range wireless communication chip is enabled to perform the communication method for the head-mounted wireless headset shown in any one of embodiments in FIG. 7 to FIG. 10.

An embodiment of this application further provides a computer program product. When the computer program product is run on a head-mounted wireless headset, the head-mounted wireless headset is enabled to perform the communication method for head-mounted wireless headset shown in any one of embodiments in FIG. 7 to FIG. 10.

Method or algorithm steps described in combination with the content disclosed in this application may be implemented by hardware, or may be implemented by a processor by executing software instructions. The software instructions may include a corresponding software module. The software module may be stored in a random access memory (random access memory, RAM), a flash memory, an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a core network interface device. Certainly, the processor and the storage medium may alternatively exist in the core network interface device as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another place. The storage medium may be any available medium accessible to a general-purpose or dedicated computer.

The objectives, technical solutions, and benefits of the present invention are further described in detail in the foregoing specific embodiments. It should be understood that the foregoing descriptions are merely specific embodiments of the present invention, but are not intended to limit the protection scope of the present invention. Any modification, equivalent replacement, or improvement made based on the technical solutions of the present invention shall fall within the protection scope of the present invention.

## Claims

1. A head-mounted wireless headset, comprising:
a first headphone, comprising: a first short-range wireless communication chip and a first radio frequency antenna, wherein the first short-range wireless communication chip is coupled to the first radio frequency antenna;
a second headphone, comprising: a second short-range wireless communication chip and a second radio frequency antenna, wherein the second short-range wireless communication chip is coupled to the second radio frequency antenna; and
a data bus, separately connected to the first short-range wireless communication chip and the second short-range wireless communication chip, and configured to provide a physical link required for communication between the first short-range wireless communication chip and the second short-range wireless communication chip.

2. The head-mounted wireless headset according to claim 1, wherein the first short-range wireless communication chip is configured to:
receive a data packet from a terminal device through the first radio frequency antenna; and
when the data packet is not successfully received, send first information to the second short-range wireless communication chip through the data bus, to request the second short-range wireless communication chip to forward the data packet, wherein the first information indicates that the first short-range wireless communication chip does not successfully receive the data packet.

3. The head-mounted wireless headset according to claim 2, wherein the second short-range wireless communication chip is configured to:
receive the data packet from the terminal device through the second radio frequency antenna; and
when the data packet is successfully received, in response to the first information, transmit the data packet to the first short-range wireless communication chip through the data bus.

4. The head-mounted wireless headset according to claim 2 or 3, wherein the first short-range wireless communication chip is a primary chip, and the second short-range wireless communication chip is a secondary chip;
the second short-range wireless communication chip is further configured to send second information to the first short-range wireless communication chip through the data bus, wherein the second information indicates that the second short-range wireless communication chip successfully receives the data packet; and
the first short-range wireless communication chip is further configured to send third information to the terminal device in response to the second information, wherein the third information indicates that the data packet is successfully received.

5. The head-mounted wireless headset according to claim 2, wherein the first short-range wireless communication chip is a primary chip, and the second short-range wireless communication chip is a secondary chip; and
the first short-range wireless communication chip is further configured to: when the first short-range wireless communication chip successfully receives the data packet, send third information to the terminal device, wherein the third information indicates that the data packet is successfully received.

6. The head-mounted wireless headset according to claim 5, wherein the first short-range wireless communication chip is further configured to send fourth information to the second short-range wireless communication chip, wherein the fourth information indicates that the first short-range wireless communication chip successfully receives the data packet.

7. The head-mounted wireless headset according to any one of claims 1 to 6, wherein the first headphone further comprises a first speaker, and the first speaker is coupled to the first short-range wireless communication chip; the second headphone further comprises a second speaker, and the second speaker is coupled to the second short-range wireless communication chip;
the first short-range wireless communication chip is further configured to: decode the data packet, and play the decoded data packet by using the first speaker; and
the second short-range wireless communication chip is further configured to: decode the data packet, and play the decoded data packet by using the second speaker.

8. The head-mounted wireless headset according to claim 1, wherein the first short-range wireless communication chip is a primary chip, and the second short-range wireless communication chip is a secondary chip;
the second short-range wireless communication chip is further configured to: when the second short-range wireless communication chip does not successfully receive a data packet from a terminal device, send fifth information to the first short-range wireless communication chip through the data bus, wherein the fifth information indicates that the second short-range wireless communication chip does not successfully receive the data packet; and
the first short-range wireless communication chip is configured to: when the first short-range wireless communication chip does not successfully receive the data packet, send sixth information to the terminal device in response to the fifth information, wherein the sixth information indicates the terminal device to retransmit the data packet.

9. The head-mounted wireless headset according to any one of claims 1 to 8, wherein the data bus comprises a serial peripheral interface SPI bus, a queued serial peripheral interface QSPI bus, a dual serial peripheral interface DSPI bus, a universal asynchronous receiver/transmitter UART bus, or an inter-integrated circuit bus I2C.

10. The head-mounted wireless headset according to any one of claims 1 to 9, wherein the first short-range wireless communication chip comprises a first audio processor, a first radio frequency circuit, and a first physical interface, the first audio processor is separately coupled to the first radio frequency circuit and the first physical interface, and the first radio frequency circuit is coupled to the first radio frequency antenna; the second short-range wireless communication chip comprises a second audio processor, a second radio frequency circuit, and a second physical interface, the second audio processor is separately coupled to the second radio frequency circuit and the second physical interface, the second radio frequency circuit is coupled to the second radio frequency antenna, and the first physical interface and the second physical interface are coupled through the data bus;
the first audio processor is configured to: exchange data with the terminal device through the first radio frequency circuit and the first radio frequency antenna, and exchange data with the second short-range wireless communication chip through the first physical interface and the data bus; and
the second audio processor is configured to: exchange data with the terminal device through the second radio frequency circuit and the second radio frequency antenna, and exchange data with the first short-range wireless communication chip through the second physical interface and the data bus.

11. The head-mounted wireless headset according to any one of claims 1 to 10, wherein
the first short-range wireless communication chip and the second short-range wireless communication chip are further configured to determine a primary chip between the first short-range wireless communication chip and the second short-range wireless communication chip based on a signal quality parameter of a signal received by each of the first short-range wireless communication chip and the second short-range wireless communication chip.

12. The head-mounted wireless headset according to claim 11, wherein the signal quality parameter comprises: any one or more of reference signal receiving power RSRP, reference signal receiving quality RSRQ, a received signal strength indicator RSSI, a packet loss rate PER, and a signal to interference plus noise ratio SINR.

13. The head-mounted wireless headset according to any one of claims 1 to 12, wherein there are a plurality of first radio frequency antennas, and there are a plurality of second radio frequency antennas;
the first short-range wireless communication chip is further configured to determine a target first radio frequency antenna from the plurality of first radio frequency antennas based on a signal quality parameter of a signal received by each of the plurality of first radio frequency antennas, and there are one or more target first radio frequency antennas; and
the second short-range wireless communication chip is further configured to determine a target second radio frequency antenna from the plurality of second radio frequency antennas based on a signal quality parameter of a signal received by each of the plurality of second radio frequency antennas, and there are one or more target second radio frequency antennas.

14. The head-mounted wireless headset according to claim 13, wherein
the first short-range wireless communication chip is specifically configured to receive the data packet from the terminal device through the target first radio frequency antenna; and
the second short-range wireless communication chip is specifically configured to receive the data packet from the terminal device through the target second radio frequency antenna.

15. A short-range wireless communication chip, wherein the short-range wireless communication chip comprises an audio processor, a radio frequency circuit, and a physical interface, wherein the audio processor is separately coupled to the radio frequency circuit and the physical interface, the radio frequency circuit is configured to be coupled to a radio frequency antenna, and the physical interface is configured to be coupled to a data bus;
the audio processor is configured to exchange data with a terminal device through the radio frequency circuit and the radio frequency antenna; and
the audio processor is further configured to: send data to the data bus through the physical interface, and receive data transmitted by the data bus.

16. The chip according to claim 15, wherein the audio processor is specifically configured to:
receive a data packet from the terminal device through the radio frequency antenna; and
when the data packet is not successfully received, send first information to the data bus through the physical interface, to request another short-range wireless communication chip coupled to the data bus to forward the data packet, wherein the first information indicates that the short-range wireless communication chip does not successfully receive the data packet.

17. The chip according to claim 16, wherein
the audio processor is further specifically configured to: when the another short-range wireless communication chip successfully receives the data packet, receive the data packet from the another short-range wireless communication chip through the physical interface and the data bus.

18. The chip according to claim 16 or 17, wherein the audio processor is further specifically configured to:
receive second information from the another short-range wireless communication chip, wherein the second information indicates that the another short-range wireless communication chip successfully receives the data packet; and
send third information to the terminal device in response to the second information, wherein the third information indicates that the data packet is successfully received.

19. The chip according to claim 16, wherein the audio processor is further specifically configured to: when the short-range wireless communication chip successfully receives the data packet, send third information to the terminal device, wherein the third information indicates that the data packet is successfully received.

20. The chip according to claim 19, wherein the audio processor is further specifically configured to: send fourth information to the another short-range wireless communication chip, wherein the fourth information indicates that the short-range wireless communication chip successfully receives the data packet.

21. The chip according to claim 15, wherein the audio processor is further specifically configured to:
receive fifth information from another short-range wireless communication chip coupled to the data bus, wherein the fifth information indicates that the another short-range wireless communication chip does not successfully receive a data packet from the terminal device; and
when the short-range wireless communication chip does not successfully receive the data packet, send sixth information to the terminal device in response to the fifth information, wherein the sixth information indicates the terminal device to retransmit the data packet.

22. A communication method for a head-mounted wireless headset, wherein the head-mounted wireless headset comprises a first headphone, a second headphone, and a data bus, the first headphone comprises a first short-range wireless communication chip and a first radio frequency antenna coupled to the first short-range wireless communication chip, and the second headphone comprises a second short-range wireless communication chip and a second radio frequency antenna coupled to the second short-range wireless communication chip; the data bus is separately connected to the first short-range wireless communication chip and the second short-range wireless communication chip, and is configured to provide a physical link required for communication between the first short-range wireless communication chip and the second short-range wireless communication chip; and the method comprises:
receiving, by the first short-range wireless communication chip, a data packet from a terminal device through the first radio frequency antenna; and
receiving, by the second short-range wireless communication chip, the data packet from the terminal device through the second radio frequency antenna.

23. The method according to claim 22, wherein the method further comprises:
when the first short-range wireless communication chip does not successfully receive the data packet, sending, by the first short-range wireless communication chip, first information to the second short-range wireless communication chip through the data bus, to request the second short-range wireless communication chip to forward the data packet, wherein the first information indicates that the first short-range wireless communication chip does not successfully receive the data packet.

24. The method according to claim 23, wherein the method further comprises:
when the second short-range wireless communication chip successfully receives the data packet, transmitting, by the second short-range wireless communication chip in response to the first information, the data packet to the first short-range wireless communication chip through the data bus.

25. The method according to claim 23 or 24, wherein the first short-range wireless communication chip is a primary chip, and the second short-range wireless communication chip is a secondary chip; and the method further comprises:
sending, by the second short-range wireless communication chip, second information to the first short-range wireless communication chip through the data bus, wherein the second information indicates that the second short-range wireless communication chip successfully receives the data packet; and
sending, by the first short-range wireless communication chip, third information to the terminal device in response to the second information, wherein the third information indicates that the data packet is successfully received.

26. The method according to claim 23, wherein the first short-range wireless communication chip is a primary chip, and the second short-range wireless communication chip is a secondary chip; and the method further comprises:
when the first short-range wireless communication chip successfully receives the data packet, sending, by the first short-range wireless communication chip, third information to the terminal device, wherein the third information indicates that the data packet is successfully received.

27. The method according to claim 26, wherein the method further comprises:
sending, by the first short-range wireless communication chip, fourth information to the second short-range wireless communication chip, wherein the fourth information indicates that the first short-range wireless communication chip successfully receives the data packet.

28. The method according to any one of claims 22 to 27, wherein the first headphone further comprises a first speaker, and the first speaker is coupled to the first short-range wireless communication chip; the second headphone further comprises a second speaker, and the second speaker is coupled to the second short-range wireless communication chip; and the method further comprises:
decoding, by the first short-range wireless communication chip, the data packet, and playing the decoded data packet by using the first speaker; and
decoding, by the second short-range wireless communication chip, the data packet, and playing the decoded data packet by using the second speaker.

29. The method according to claim 22, wherein the first short-range wireless communication chip is a primary chip, and the second short-range wireless communication chip is a secondary chip; and the method further comprises:
when the second short-range wireless communication chip does not successfully receive the data packet, sending, by the second short-range wireless communication chip, fifth information to the first short-range wireless communication chip through the data bus, wherein the fifth information indicates that the second short-range wireless communication chip does not successfully receive the data packet; and
when the first short-range wireless communication chip does not successfully receive the data packet, sending, by the first short-range wireless communication chip, sixth information to the terminal device in response to the fifth information, wherein the sixth information indicates the terminal device to retransmit the data packet.

30. The method according to any one of claims 22 to 29, wherein the first short-range wireless communication chip comprises a first audio processor, a first radio frequency circuit, and a first physical interface, the first audio processor is separately coupled to the first radio frequency circuit and the first physical interface, and the first radio frequency circuit is coupled to the first radio frequency antenna; and the second short-range wireless communication chip comprises a second audio processor, a second radio frequency circuit, and a second physical interface, the second audio processor is separately coupled to the second radio frequency circuit and the second physical interface, the second radio frequency circuit is coupled to the second radio frequency antenna, and the first physical interface and the second physical interface are coupled through the data bus.
